(19)

Europäisches Patentamt

European Patent Office

Office européen des brevets

(11)  **EP 4 328 763 A1**

(12)  **EUROPEAN PATENT APPLICATION**

(43) Date of publication:
**28.02.2024  Bulletin 2024/09**

(21) Application number: **23190938.3**

(22) Date of filing: **10.08.2023**

(51) International Patent Classification (IPC):
**G06F 16/906** (2019.01)     **G06N 3/00** (2023.01)

(52) Cooperative Patent Classification (CPC):
**G06F 16/906; G06N 3/00**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **24.08.2022  RU 2022122824**
**31.07.2023  US 202318361976**

(71) Applicant: **AO Kaspersky Lab**
**Moscow 125212 (RU)**

(72) Inventors:
• **LAVRENTYEV, Andrey B.**
**125212 Moscow (RU)**

• **IVANOV, Dmitry A.**
**125212 Moscow (RU)**
• **SHKULEV, Vyacheslav I.**
**125212 Moscow (RU)**
• **DEMIDOV, Nikolay N.**
**125212 Moscow (RU)**
• **MAMAEV, Maxim A.**
**125212 Moscow (RU)**
• **TRAVOV, Alexander V.**
**125212 Moscow (RU)**

(74) Representative: **Chimini, Francesco et al**
**Jacobacci & Partners S.p.A.**
**Piazza della Vittoria 11**
**25122 Brescia (IT)**

(54)  **SYSTEM FOR IDENTIFYING PATTERNS AND ANOMALIES IN THE FLOW OF EVENTS FROM A CYBER-PHYSICAL SYSTEM**

(57)      Disclosed herein are systems for identifying the structure of patterns and anomalies in flow of events from the cyber-physical system or information system. In one example, an exemplary method comprises, using at least one connector, getting event data, generating at least one episode consisting of a sequence of events, and transferring the generated episodes to an event processor; and using the event processor, process episodes using a neurosemantic network, wherein the processing includes recognizing events and patterns previously learned by the neurosemantic network, training the neurosemantic network, identifying a structure of patterns by mapping to the patterns of neurons on a hierarchy of layers of the neurosemantic network, attributing events and patterns corresponding to neurons of the neurosemantic network to an anomaly depending on a number of activations of the corresponding neuron, and storing the state of the neurosemantic network.

Fig. 1

EP 4 328 763 A1

**Description**

**FIELD OF TECHNOLOGY**

The present disclosure relates to the field of information technology and information management systems, including information and industrial security, and more specifically to systems and methods for identifying the structure of patterns and anomalies in the flow of events coming from a cyber-physical system (CPS) or an information system (IS).

**BACKGROUND**

For the objects of monitoring of the CPS or IS are characterized by the presence of a flow of data characterizing the work of these objects. Such data serve as an important subject of analysis both in real time (online) and retrospectively from the collected data to detect anomalies (deviations from the normal operation of the object), as well as to identify patterns in the normal operation of the object. The latter is very important for the operator of the object, because allows you to identify cause-and-effect relationships in the operation of the object and draw conclusions about which aspect of these connections was broken, when the behavior of the object has deviated from the norm.

Data streams coming from an object of CPS or IS are divided into two groups:

- telemetry of the physical processes of the CPS (sensor readings, setpoint values, levels of control actions)," hereinafter referred to as "telemetry"; and
- events in the CPS (individual commands, personnel actions, alarms, etc.) and events in the IS (personnel actions, connections and similar events in the data network, the transition of subsystems to a particular state), including those accumulated with the help of solutions such as SIEM, hereinafter referred to as "events".

For the analysis of data of the first type (telemetry of physical processes), predictive models based on neural networks and other methods of machine learning are successfully used, hereinafter referred to as predictive detectors. Examples of such detectors are described, for example, in the patents US11494252 and US11175976, which are incorporated by reference herein.

Physical processes have two properties that make predictive models possible:

- Continuity: a physical process develops continuously and any of its parameters has a specific value at any given time, regardless of whether the value of the parameter is measured at that moment or not; and
- Strong interdependence: the parameters of the process are rigidly interrelated in time; if all other things being equal, changes in one parameter always lead to changes in another parameter after a certain time at a certain rate (this does not mean that the laws of such changes are known; their determination that is the task of machine learning).

The second type of data is an event stream.

An event is a non-developing atomic change in the state of an object, which is characterized by the point in time when the change occurred and a set of fields (event fields) whose values describe the composition of such change.

Patterns are sequences of elements (events or other patterns) into which the flow of events from the monitored object is divided, corresponding to separate subprocesses in the operation of the object. One pattern corresponds to two sequences from the same set of elements, provided that two sequences of elements have intervals between elements within the specified limits and/or the order of the elements varies within specified limits, in particular when the composition and order of the elements are strictly observed, and the intervals between elements vary within specified limits. In the case where a pattern consists of other patterns, such a pattern is called a composite or simply a pattern, and other patterns are called nested. This hierarchical nesting of patterns is called pattern structure. Each pattern can be represented as a sequence of events through nested patterns.

Within each pattern, events or nested patterns adhere to a specific order. The intervals between them, on the one hand, are random (there is no exact repetition of time intervals), but on the other hand, they are within some framework, implicitly set by the specifics of the functioning of the object.

Patterns can be repeating (but not necessarily periodic) or new (occurred once). Repetitive patterns characterize the learned operation of an object during the monitoring time. A new event or new pattern indicates an anomaly in the operation of the object - an event or sequence of events that has not previously been observed. New patterns and, accordingly, anomalies will be considered as sequences of events with a significant change in the intervals between events while maintaining the sequence of events of a previously known repetitive pattern, or with a violation of the sequence of events (change of order, omission or appearance of new events) in comparison with previously known repetitive patterns.

Therefore, a technical problem arises, consisting in identifying in the flow of events from the CPS or IS a structure of hierarchically nested repetitive (but not necessarily periodic) patterns that reflect cause-and-effect relationships in the flow of events from the CPS or IS, as well as in attributing new patterns and new events to anomalies. That is, information about which event or pattern or what part of the pattern structure has not previously been observed indicates the presence of an anomaly in the CPS or IP.

Despite the fact that an experienced operator who is familiar with the patterns of his object is able to identify anomalies in the flow of events, the psychophysical capabilities of a person do not allow to cope with the flow of information coming from modern complex objects (dozens and hundreds of events per second). Processing of such a flow of information in real time is possible only with the help of an automated system based on machine learning and artificial intelligence (AI).

However, the event flow does not have any of the above-mentioned properties of physical processes, namely the following:

First, events are discrete: events exist only at specific points in time and are not defined in between. This circumstance does not allow the use of approaches based on modeling continuous functions, which are the basis of many machine learning methods.

Secondly, the interdependence of events is usually weak: events form repetitive sequences (for example, an event arrives "the operator of the CPS entered the machine room", after which the event "the command was given to turn on the aggregate" is received), but the time intervals between events within the sequence can vary widely (in the example above, the normal interval between events is from 4 to 8 minutes).

Thus, for the analysis of events, technologies and predictive detectors used when working with continuous processes are not suitable due to the specific properties of events.

Known approaches in the field of detection of anomalies in sequences of events can be divided into three classes:

**1)** Using the principle of searching for events and sequences of events by signatures (predefined rules), see, for example, US9529690B2, US20170293757A1;

**2)** Machine learning-based learning on some historical sample from the event stream, see, for example, US20200143292A1; and

**3)** Based on the search for patterns in the flow of symbolic information, for example, using the Sequitur algorithm.

The first class of solutions can be attributed to the class of diagnostic rules (search for anomalies according to specified criteria). Solutions in this class are sensitive only to pre-known scenarios, and their use is fraught with significant difficulties in accounting for possible variations in the time intervals between events in the sequence of events.

The second class of decisions is subject to various kinds of errors associated with the initial incompleteness of the events presented in the historical sample, their order and time intervals in sequences.

The advantage of the third class is that the search is conducted over an open data stream -- neither the training sample nor the set of patterns is pre-restricted. However, this class does not take into account the variability of time intervals between characters and does not implement multidimensional character streams that you have to deal with when working with events. It follows from the foregoing that the technologies known in the art do not solve the claimed technical problem. Therefore, there is a need to solve this technical problem.

Thus, there is a need for a more optimal way of identifying patterns and anomalies in a flow of events from a cyber-physical system.

## SUMMARY

Examples of the invention relate to identifying patterns and anomalies in a flow of events from a cyber-physical system. In one example, repetitive events and patterns and the attribution of both new events and new patterns to anomalies in the work of the CPS or IP in the flow of events from the CPS or IS are identified. The result is achieved by machine learning methods based on a neurosemantic network without the need to divide the work process into two isolated phases from each other: (a) training on historical data and (b) inference.

In another example, the structure of patterns in the flow of events from the CPS or IS is recognized. The recognition is achieved through machine learning methods based on a neurosemantic network without the need to divide the work process into two isolated phases: a) training on historical data and b) inference.

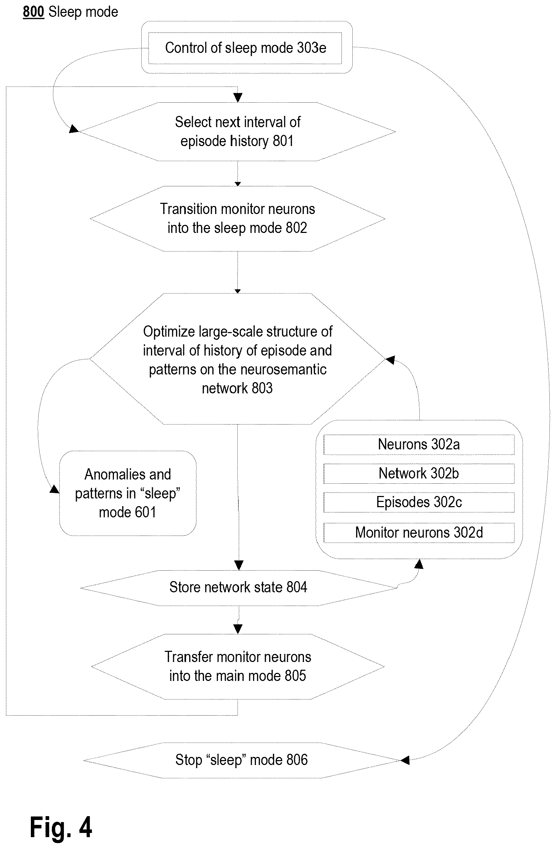

In another example, the quality of detection of events and patterns and their attribution to an anomaly in the work of the CPS or IP is improved. The improvement is achieved due to each of the following factors: continuous online learning, additional optimization of the neurosemantic network during the special phase of the work cycle in the "sleep" mode (see e.g., Fig. **4**), a mechanism for selective monitoring of the activity of a neurosemantic network based on special monitor neurons, and interaction with predictive detectors that detect anomalies in the telemetry stream.

In another example, when there are only a small number of examples of sequences of events corresponding to the pattern (one-shot learning) through the use of a neurosemantic network, the quality of detection of patterns and anomalies in the CPS or IS is improved.

In another example, the level of information noise in the flow of events is reduced, by using a mechanism that accounts for the values of event fields characterizing a particular CPS or IS.

In one example, a method is provided for identifying patterns and anomalies in a flow of events from a cyber-physical system, the method comprising: using at least one connector, getting event data that includes a set of field values and an event timestamp for each event, generating at least one episode consisting of a sequence of events, and transferring the generated episodes to an event processor; and using the event processor, process episodes using a neurosemantic network, wherein the processing episodes includes recognizing events and patterns previously learned by the neurosemantic network, training the neurosemantic network, identifying a structure of patterns by mapping to the patterns of neurons on a hierarchy of layers of the neurosemantic network, attributing events and patterns corresponding to neurons of the neurosemantic network to an anomaly depending on a number of activations of the corresponding neuron, and storing the state of the neurosemantic network.

In one example, the processing of the episode further comprises: identifying a set of events and patterns of the neurosemantic that satisfy a predetermined criterion; and generating output information about the set of events and patterns through the use of special neuron-monitor neurons of the neurosemantic network, which, by activating monitor neurons, monitor the creation and activation of the neurons corresponding to events and patterns, wherein the predetermined criteria specify at least: values of the fields of individual events and events in the patterns; a sign of an recurrence of the events and patterns; and tracking, based on a sliding time interval, the activations and the number of activations during the sliding time interval.

In one example, learning is partially stopped by forcing the transfer of the neurosemantic network to a mode where the creation of new neurons does not occur, and wherein all learning occurs only by changing neurons when they are activated.

In one example, a teacher is used for training a neurosemantic network by submitting, to the input, targeted patterns for training, and wherein a frequency of activation and/or a number of activations are based only on subsequent modification of the attribute in the generated neurons.

In one example, patterns are periodically removed from the neurosemantic network of unused neurons, wherein the use of neurons is determined by statistical properties of neurons and a hierarchical principle of a minimum length of description, the minimum length determining a functioning of the neurosemantic network.

In one example, the structure of patterns is revealed through a hierarchy of layers of the neurosemantic network, the structure determining the order of the layers of the neurosemantic network on which neurons are located, and wherein the processing of events using the neurosemantic network comprising: on the zero layer of the neurosemantic network, having neurons corresponding to the values of the event fields, grouped by channels corresponding to the event fields, wherein the duration of the terminal neuron being taken as being zero and the zero layer being a terminal layer; on the first layer of the neurosemantic network, having neurons corresponding to events, and having inputs from neurons of the terminal layer, wherein each input corresponds to the terminal neuron of the channel, different from the channels of terminal neurons of other inputs, the time intervals between event inputs from the field values being taken as being equal to zero, and a total duration of the event neuron being respectively taken as being equal to zero thereby indicating that the event has no duration; on the second layer of the neurosemantic network, having neurons corresponding to episodes, the number of inputs of the neuron of the episode being equal to the number of events in the episode, the intervals between events in the episode being exactly stored as intervals between inputs of the neuron of the episode; and the second and subsequent layers of the neurosemantic network having neurons corresponding to the sequences of events, with neurons of the third layer and subsequent layers having inputs from neurons of the previous layers and an opening of the pattern to a sequence of events being carried out through recursive disclosure of all inputs up to the first layer, and the event being expanded to the values of the fields through inputs from terminal neurons.

In one example, each episode is sequentially processed on the layers of the neurosemantic network: by matching the values of the event fields of the terminal neurons, by matching the events of the neurons of the first layer, by creating neurons of the top episodes on the second layer, by matching the sequences of events of the neurons of the patterns on the second and above layers up to the layer on which one neuron top neuron is mapped indicating the pattern reaching the maximum layer.

In one example, the activation of the pattern neuron is performed when recognizing a sequence in the event stream, with an event order corresponding an order of events obtained by opening the neuron performed recursively through inputs up to the first layer, and the duration of the detected sequence being within the interval determined by a duration of the neuron of the pattern and a neurosemantic network hyperparameter being greater that zero in accordance to $d \cdot [max(0, 1 - \sigma), 1 + \sigma]d$, when $(\sigma > 0)$.

In one example, the neurons-monitors are created or changed by the user during the operation of the neurosemantic network on a special minus first layer, allowing to monitor the creation and activation of neurons of the neurosemantic network under specified conditions, and wherein the monitor neurons are used as output channels from the neurosemantic network to alert a user or an external system.

In one example, the neurons of the zero layer and subsequent layers have at least the following properties: contain a vector of input connections from the neurons of the previous layer; For the zero layer, the vector contains a single categorical or converted to a categorical value of the event field; contain a vector of time intervals between activations of connections from neurons of the previous layer fixed when the neuron was created, for the zero layer, the vector consisting of one zero value, for neurons of the first layer and subsequent layers having only one input, the duration of the single input being equal to the duration of the single input neuron; if there are output connections, the set of the output connections to the monitor neurons being minus the first layer; contain the time of the last activation of the neuron; and contain a statistical parameter that reflects the frequency of activations of the neuron, in particular the number of activations.

In one example, the attention configuration of the neurosemantic network is further specified by specifying attention directions for filtering the received events based on criteria for field values for recognizing patterns among events filtered in each such direction.

In one example, each episode is sequentially processed on layers from the second and above layers for each direction of attention in the case of setting the attention configuration, up to the layer on which a top pattern is mapped for this direction of attention or a maximum layer is reached.

In one example, a neuron is mapped during processing by activating a neuron of a corresponding layer if it is recognized, or by creating and activating a new neuron if a new field value, event, or pattern is observed, depending on the layer.

In one example, the hierarchical structure of patterns on the layers of the neurosemantic network is optimized by periodically switching the neurosemantic network to a sleep mode, wherein the events in the episodes are not processed or are processed in parallel on other computing resources, in the sleep mode, events are processed from the event history interval obtained by combining several short episodes and ordering events according to their time, for cases where some of the events in the stream came outside of their episode, and processing at long intervals for those areas of attention for which events are rare, or in the case of a change in the direction of attention.

In one example, the neurons have at least the following properties: contain at least one input to which a dendritic tree is attached with nodes implementing logical operations on the outputs attached to them from other neurons or from network layers; contain a dendritic node attached to the root of the dendritic tree with a logical operation "or" and outputs attached to the node from neurons of the zero and subsequent layers used to detect the activation of field values, events and patterns already learned by the network, the criterion for the subscription of the monitor neuron to the activation of such neurons being set through the definition of conditions for field values; contain 0 or more attached to the node "or" other dendritic nodes with a logical operation "and", to which in turn are attached outputs from neurons of the zero layer corresponding to the values of the fields and outputs directly from the zero layer and subsequent layers, which are used to detect the creation of new neurons corresponding, depending on the layer, to the values of the fields, either events or patterns, dendritic nodes "and" set the conditions for what field values the neurons created on the specified layers must have in order to activate this neuron-monitor; have the ability to dynamically change the set of inputs of the monitor neuron from the network neurons to automatically add to the dendritic node "or" new created neurons that meet the criteria of the dendritic node "and"; have the ability to set an attention option on the values of the subscription fields and create child monitor neurons for each unique value or a unique combination of such values of such fields, becoming the parent monitor neuron, child monitor neurons will count the number of activations with this unique value and the rest of the subscription conditions, as in the parent monitor neuron, and notify the parent monitor about their trigger; have the ability to subscribe only to previously created and activated more than once neurons, and only to new neurons that are activated once, as well as to both together, subscribing only to new neurons being considered as anomalies in the flow of events; and contain a property for specifying the sliding monitoring interval and the amount of activation of the monitor neuron at the sliding interval, upon reaching which the monitor neuron will generate an alert to the user or other systems.

In one example, the sequence of events is obtained either before a fulfillment of one of the conditions, the conditions including a time limit has been reached or a limit on the number of events has been reached, or before the fulfillment of the one of the said conditions that was fulfilled first.

In one example, the recognizing events and patterns previously learned by the neurosemantic network includes recognizing sequences of events in which the order of events is observed, and wherein the time intervals between events are within the specified constraints stored in the form of neurons of the neurosemantic network, and wherein the activation of the neurons is recognized.

In one example, the training of the neurosemantic network, consists in the creation and activation of neurons that are mapped to new values of event fields, new events, and new patterns, and activation of recognized previously learned neurons in such a way that previously learned and new patterns of the neurosemantic network cover all the events of the episode.

In one example, the storing of the state of the neurosemantic network includes storing information about created and activated neurons in a storage subsystem.

In one example, an optimal coverage of all events of the episode is selected according to either a hierarchical principle of the minimum length of the description, or according to a most compact coverage of all events of current and previous episodes.

In one example, the processing of the episode is performed in the neurosemantic network in layers.

In one example, the method further comprises configuring, storing, and restoring the neurosemantic network from the storage subsystem, wherein the configuration of the neurosemantic network includes: configuration of input channels of the neurosemantic network in accordance with the event fields characteristic of a particular CPS or IP; configuration of attention of the neurosemantic network by setting directions of attention for filtering the received events based on criteria on the values of the fields for recognizing patterns among the events filtered in each such direction; configuration of permissible time deviations in the duration of the pattern, within which the neurosemantic network interprets sequences of events of the same order or nested patterns, but with different total durations of such sequences as the same pattern; configuration of hyperparameters of network layers responsible for the number of neuronal inputs on the layer; and configuration of the network hyperparameter responsible for the allowable number of layers of the neurosemantic network.

In one example, the method further comprises: configuring neurosemantic network activity monitors through a creation of special monitor neurons that are activated based on subscription to other neurons or layers on which new neurons are created, configure a neurosemantic network, and form a subscription according to criteria specified in terms of event field values, the sliding time interval and the number of activations of neurons to which such a subscription is to be performed; executing user requests on history of events and patterns; performing periodic optimization of the neurosemantic network in the sleep mode of the system, the optimization including optimizing the structure of patterns and recognizing patterns at long intervals of time; and performing the preservation of the state of the neurosemantic network, including information about patterns and statistics of activations on stream of events, and processed information about episodes of events.

In one example, a graphical user interface is used for configurations of the neurosemantic network, for controlling connectors, for the configuration of neurosemantic network activity monitors, for output of information about monitored activities and operations, for the setting of user requests for history of patterns and events, for outputting of responses to user requests, for controlling sleep mode, and for settings conditions for storing the state of the neurosemantic network.

In one example, the triggering of monitor neurons are stored in a storage subsystem.

In one example, the operation of the event processor is restarted after a shutdown while retaining previously learned events and patterns.

In one example, events are received from predictive detectors by CPS telemetry and/or directly from the CPS.

According to one example, a system is provided for identifying patterns and anomalies in a flow of events from a cyber-physical system, the system comprising any combination of one or more hardware processors, configured to: get event data that includes a set of field values and an event timestamp for each event, generate at least one episode consisting of a sequence of events, and transfer the generated episodes to an event processor; and process episodes using a neurosemantic network, wherein the processing episodes includes recognizing events and patterns previously learned by the neurosemantic network, training the neurosemantic network, identifying a structure of patterns by mapping to the patterns of neurons on a hierarchy of layers of the neurosemantic network, attributing events and patterns corresponding to neurons of the neurosemantic network to an anomaly depending on a number of activations of the corresponding neuron, and storing the state of the neurosemantic network.

The method and system of the present disclosure are designed to identify patterns and anomalies in a flow of events from a cyber-physical system. In another example, the structure of patterns in the flow of events from the CPS or IS is recognized. In another example, the quality of detection of events and patterns and their attribution to an anomaly in the work of the CPS or IP is improved. In another example, the level of information noise in the flow of events is reduced.

## BRIEF DESCRIPTION OF THE DRAWINGS

The accompanying drawings, which are incorporated into and constitute a part of this specification, illustrate one or more examples of the present disclosure and, together with the detailed description, serve to explain their principles and implementations.

**Fig. 1** illustrates an example of an interaction of a system for identifying structures of patterns and anomalies in a flow of events from a Cyber-Physical System (CPS) or Information System (IS).

**Fig. 2** illustrates a diagram of the components of the pattern and anomaly detection system.

**Fig. 3** illustrates a main cycle of an operation of the components of the pattern and anomaly detection system.

**Fig. 4** illustrates an operation in a "sleep" mode of components of the pattern and anomaly detection system.

**Fig. 5** illustrates an exemplary method for processing user requests for history of patterns and anomalies.

**Fig. 6** illustrates an exemplary method for processing user requests for creating a new monitor neuron during an operation of an anomaly detection system.

**Fig. 7** illustrates an exemplary of a basic structure of layers of a neurosemantic network for processing events.

**Fig. 8** illustrates main characteristics of a neuron in a neurosemantic network and application of the characteristics for event flow analysis based on episode processing.

**Fig. 9a** illustrates an exemplary of a treatment of an episode by a neurosemantic network for a case where the direction of attention is not determined.

**Fig. 9b** illustrates an exemplary method for processing episode for a case where one direction of attention is defined.

**Fig. 10** illustrates an exemplary method for processing intervals between the inputs of neurons of an episode, including cases of "transitional" neurons with one input, on layers of the neurosemantic network.

**Fig. 11** illustrates an exemplary implementation of a neurosemantic network activity monitoring due to special neuronal monitors on the minus first layer of this network.

**Fig. 12** presents an example of a general purpose computer system on which embodiments of the present invention can be implemented.

## DETAILED DESCRIPTION

Examples are described herein in the context of a system, method, and a computer program identifying patterns and anomalies in a flow of events from a cyber-physical system. Examples are provided for illustrating the essence of the present method for identifying the patterns and anomalies. However, the implementation is not limited to the exemplary scenarios disclosed below. The description is intended to assist a person skilled in the art for a comprehensive understanding of the disclosure.

In order to clearly describe the teachings of the present disclosure, a glossary of terminologies and concepts is first provided below.

An Information System (IS) refers to a set of computing devices and means of their communication.

A Cyber-Physical System (CPS) refers to an information technology system that integrates computing resources into physical processes. Examples of a cyber-physical system are automated process control systems, the Internet of Things (including wearable devices), and the Industrial Internet of Things.

A Technological Process (TP) refers to a physical process accompanied by a telemetry stream.

The term "telemetry" in the present disclosure refers to telemetry of physical processes of the CPS (e.g., values of process variables, setpoints, control parameters).

Process Variable (PV) refers to the current measured value of a certain part of the TP that is observed or controlled. The PV can be, for example, the measurement of a sensor.

Setpoint refers to a supported value of a process variable.

A Manipulated Variable (MV) refers to a parameter that is adjusted so that the value of the process variable is maintained at the setpoint level.

The term "object" in the present disclosure refers to an object of monitoring, such as and IS or CPS.

An event refers to a non-developing atomic change in the state of an object, which is characterized by the point in time when the change occurred and a set of fields (event fields) whose values describe the composition of the change.

"Patterns" refer to sequences of elements (events or other patterns) into which the flow of events from the monitored object is divided, corresponding to separate subprocesses in the operation of the object. One pattern corresponds to two sequences from the same set of elements, provided that two sequences of elements have intervals between elements within the specified limits and/or the order of the elements varies within specified limits, in particular, when the composition and order of the elements are strictly observed, and the intervals between elements vary within specified limits. In the case where a pattern consists of other patterns, such a pattern is called a composite or simply a pattern, and other patterns are called nested. This hierarchical nesting of patterns is called pattern structure. Each pattern can be represented as a sequence of events through nested patterns.

The patterns may be repetitive (but not necessarily periodically) or new (occurring once). Repetitive patterns characterize the learned operation of the object during the monitoring time. An event, or a new part of a pattern structure, indicates an anomaly in the operation of an object-an event or sequence of events that has not previously been observed.

To track events and patterns, the system provides a special mechanism (a technology together with a software and user interface) that allows one to notify the user or other systems about the occurrence of certain statistical and categorical conditions. For example, an alert may be issued if a pattern or event that meets certain criteria for the values of the event fields and criterion for novelty occurs on the specified sliding window for the first time, wherein the number of times exceeds a specified threshold. That is, the pattern or event occurs for the first time but the number of times exceeds the specified threshold value. The most general concept of anomaly within a given system comprises an event or pattern that is detected for the first time. If the system starts from scratch, then all events and patterns will initially occur for the first time. Therefore, before alerts are issued, it is advisable to give the system some time (depending on the monitored object) to "listen" to the flow of events and form a set of patterns and events characteristic of the operation of the (usually normal) object.

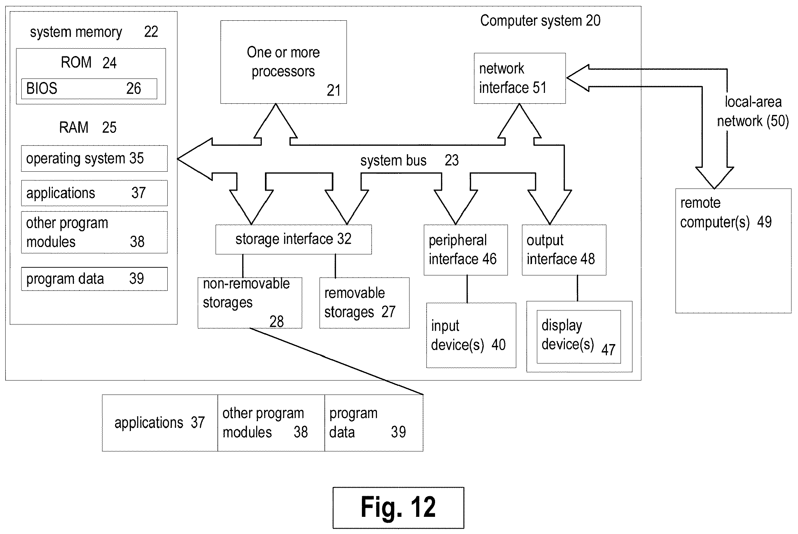

"Event processor" refers to the processor of the present disclosure and components designed to process events in the CPS or IS. The event processor may be a computer processor (e.g., processor **21** as shown in **Fig. 12**), functionally modified to perform a given functionality, or a software module running on a hardware processor that is configured to implement a given functionality. In a particular case, a hardware processor for an event processor may be implemented as a special neuromorphic processor comprising a plurality of elements corresponding to the neurons of a neural network or its varieties, which can process input signals in a massively parallel mode and generate output signals.

"Attention" refers to an option that indicates to the system the directions in the general stream of events, among which the event processor will search for patterns.

"Direction of attention" refers to a filter on the stream of events that selects events by field values (one or more, including the possible dynamic setting of them). For a certain direction of attention, the event processor searches for patterns only among events, each of which contains the specified values of fields. The event processor can have many directions of attention.

A "predictive detector" refers to a tool for analyzing the telemetry of physical processes, while functioning on principle of a predictive model based on neural networks and other machine learning methods.

The "diagnostic rules" are rules for analyzing the telemetry of physical processes used in cases where anomaly criteria are defined and formalized.

Security Information and Event Management (SIEM) refers to a system that provides real-time analysis of information security events emanating from network devices and applications.

In order to clearly describe identification of the patterns and anomalies in a flow of events from a cyber-physical system, the neurosemantic network is first described below.

**Neurosemantic Network**

In one example, the method of the present disclosure solves the problem of identifying (recognizing and/or creating new ones) patterns - thereby detecting anomalies in the flow of events based on the application of the neurosemantic network proposed in "Lavrentyev A.B., chapter 12 «Neurosemantic Network» in "Neuroinformatics and Semantic Representations", Cambridge Scholars Publishing, 2020, ISBN: 1-5275-4852-X, ISBN13: 978-1-5275-4852-7", hereinafter referred to as "Lavrentyev" and V. I. Bodyakin "Neurosemantics Information and Control Systems. Artificial Intelligence", Scientific Works, M.: Academic Project; Mir Foundation, 2020-803 p. ISBN 978-5-8291-3825-7, ISBN 978-5-919840-39-8" hereinafter referred to as "Bodyakin", which by its nature is closest to the spiking neural network.

Neurons of the neurosemantic network, as well as neurons of a spiking neural network, are activated by input impulses. However, the neuron of the neurosemantic network has an important difference - it is sensitive to the order and intervals between activations of its inputs. This property makes the neurosemantic network a highly effective tool for working with event flows, identifying stable sequences in them, thereby providing the user with a structure of cause-and-effect relationships of events from the object being monitored, as well as for identifying new events and new sequences of events as signs of possible deviations from the previously learned normal behavior (functioning) of the object.

The traditional, or classical, neural network used in predictive models is an approximator of a continuous function of a large number of variables. At each point in time, the output of a classical neural network is determined by the values of its input parameters.

The spiking neural network is arranged differently: the data in it propagates in the form of spikes - instantaneous excitations of neurons, and in a neurosemantic network, the order of occurrence of spikes at the inputs of the neuron and the intervals between the arrivals of spikes are of decisive importance for the generation of a neuron of its own spike. It's easy to see that spikes are intuitively similar to events.

The neurosemantic network begins the work of identifying patterns from a blank state, while the number of patterns to be detected and their length are not known in advance (not specified), but it is possible to set the directions of attention of the neurosemantic network in order to focus the identification of patterns when processing events on certain events and to avoid "noise" of patterns with those events that are less relevant.

The neurosemantic network does not have a dedicated period of preliminary training. It is constantly learning, building, and modifying its network as it receives new events from the event stream. If a newly identified sequence of events begins to repeat itself steadily, it turns from an anomaly into a pattern. Conversely, if the pattern has not been encountered for a long time, the neurosemantic network can "forget" it and then the next appearance of this sequence will already be regarded as an anomaly.

In one example, the representation of an event as a set of values for a certain set of fields defined for a given object is used. For example, in the private version of the CPS, the event fields may be as follows: operator name, operator terminal, installation unit, state of the installation unit. In another example of the IS, the event fields may be as follows: the username, the IP address of the user's terminal, the IP address of the server in the office network, the verdict issued by the server to the user's request. Event fields are in a special way set in accordance with the input channels and neurons of the neurosemantic network.

In this approach, an analogy can be indicated with the analysis of telemetry parameters from different sources, for example, the temperature, pressure and filling level of the CPS reactor can be considered as three channels (three fields) of input information.

In a particular example, it is possible to forcibly partially stop the learning process of the neurosemantic network by stopping the creation of new neurons in the network that correspond to new events and patterns. At the same time, part of the training is still due to the modification of previously created neurons when they are activated when recognizing patterns, events or event field values corresponding to neurons in the flow of events. This use may be appropriate in some cases, for instance, when the user knows for sure that during the training of the network the user presented all the variants of the normal behavior of the object, and the user wants to "freeze" this knowledge, thereby detecting as anomalies all new events and their sequences that did not take place in the stream of events presented during the training. In this case, the network will try to present a new sequence of events from previously occurring patterns and events, without combining them into a new pattern. If a new event occurs, the system will try to represent it in terms of the field values of previously occurred events, without creating such an event itself. However, if you encounter an event field value that has not previously occurred, the network will not activate any of its neurons, and there will be a gap in the representation of the event stream in the form of known values of event fields, events, and patterns. A user alert can also be generated for such a gap.

In one example, the main component of the proposed system and method for detecting the structure of patterns and anomalies in the flow of events coming from the CPS or IS may be referred to as an event processor.

In one example, specialized connectors (software or firmware modules) to event sources may be used to receive the event stream. In a particular example, for events from the SIEM subsystem, there may be a connector that supports the transmission of events and their parameters in common event format (CEF). In another particular example, the events may be from message brokers of other subsystems. In yet another particular example, the events may be from the Active Directory or Net Flow protocols. It is noted that the above particular examples do not limit the applicability of the method of the present disclosure to other event sources.

In a particular example, the event processor may be used as a stand-alone detector if the object data contains only events. Such use is typical, for example, to analyze the actions of employees in order to identify erroneous or malicious operations.

Industrial facilities typically generate both types of data (process and event telemetry). In this case, the predictive anomaly detectors over the telemetry stream and the event processor complement each other. Anomalies detected by a predictive detector or diagnostic rule can be interpreted as events and sent to the event processor along with events received directly from the monitored object. Such two-level detection provides users with new opportunities to identify problem situations.

In a particular example, the two-level detection may be as follows. Suppose the performance of the compressor of the pumping station describes a continuous physical process and is controlled by a predictive detector. Then, the launch of a neighboring compressor may introduce significant distortions in the indicators and leads to the registration of an anomaly by a predictive detector. This anomaly may be fed as an event to the input of the event processor along with commands to start neighboring compressors. At the same time, there may be no strict time relationship between the command to start the neighboring compressor and the detection of the anomaly by the predictive detector on the first compressor, since the duration of this interval in a particular case is determined by a large number of factors, including those not observed by the predictive detector. Nevertheless, the event processor may detect the corresponding pattern, and in the event of a violation of this pattern, may notify the user of the anomaly: when distortions of the indicators of the first compressor occurred outside the context of starting another compressor or when the launch of a neighboring compressor did not cause a corresponding change in the behavior of the first.

Thus, the predictive detector and the event processor may solve one common problem: identifying hidden anomalies in the operation of the monitored object. However, the predictive detector and the event processor may use different types of data and, as a result, different methods of machine learning. The comparative features of these types of detectors are summarized in the table below.

|  | Predictive detector | Event Processor |
|---|---|---|
| **Data** | Telemetry of continuous physical processes | Events (commands, personnel actions, etc.) |
| **Teaching** | Prior training on a large amount of historical data is required. The detector learns internal patterns and rules that determine the course of the process. It is not necessary to formulate the equations of the process in advance. | Continuous learning in the process of analyzing the flow of events. The event processor learns patterns. It is not necessary to formulate descriptions of patterns in advance. |

(continued)

|  | Predictive detector | Event Processor |
|---|---|---|
| **Anomaly Detection** | Anomalies in telemetry are revealed - deviations from the normal course of the process: unusual changes in values and trends, mismatch of mutual behavior of process variables. | Anomalies are detected - violations of patterns (missed or unnecessary events, incorrect order, unusual intervals between events, new events). |

Thus, the present disclosure describes a solution to one or more problems in the field of information management systems, including problems in information and industrial security, problem in anomaly detection (e.g., detection of anomalous events and anomalous sequences of events), concomitant problems of automatic interpretation of the structure of the regular flow of events based on the identification of patterns and their structure in the flow of events from the object of monitoring is the CPS or IS, and the like.

In order to add clarity, the composition and modes of operation are described below.

## Composition and Modes of Operation

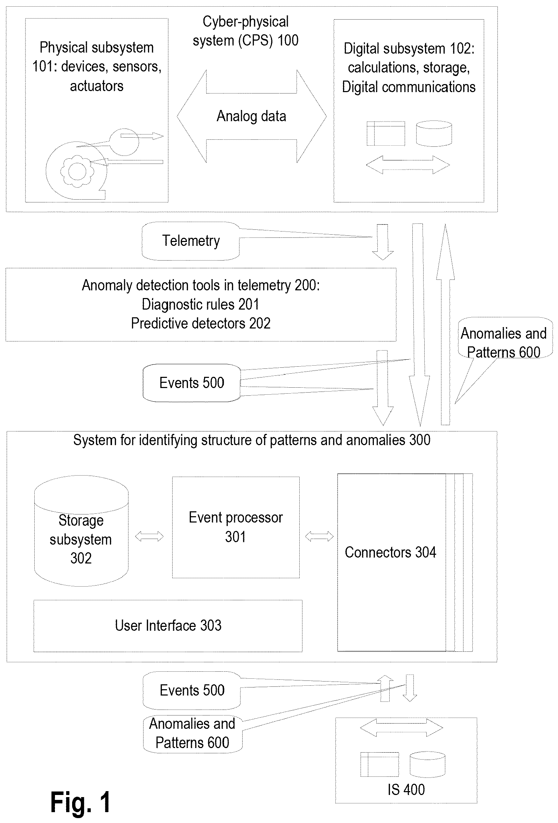

**Fig. 1** illustrates an example of an interaction of a system for identifying structures of patterns and anomalies in a flow of events from a Cyber-Physical System (CPS) or Information System (IS) **300**. The CPS or IS **300** may also be referred to as the pattern and anomaly detection system **300** or the system **300**. The interaction of the system **300** may be with a cyber-physical system **100** (CPS **100**), an anomaly detection tools in telemetry **200** (including diagnostic rules **201** and a predictive detector based on machine learning **202**), and an information system **400** (IS **400**). The example illustrated in **Fig. 1** describes how the claimed system **300** operates. Examples of CPS **100** include, but are not limited to: process automation systems, the Internet of Things (IoTs), the Industrial Internet of Things (IIoTs), and the like.

In one example, the present disclosure describes a system for identifying the structure of patterns and anomalies in the flow of events coming from the cyber-physical system or information system that is implemented on a computing system, that includes real-world devices, systems, components, and groups of components realized with the use of hardware such as integrated microcircuits (application-specific integrated circuits, ASICs) or field-programmable gate arrays (FPGAs) or, for example, in the form of a combination of software and hardware such as a microprocessor system and set of program instructions, and also on neurosynaptic chips. The functionality of such means of the system may be realized solely by hardware, and also in the form of a combination, where some of the functionality of the system means is realized by software, and some by hardware. In certain examples, some or all of the components, systems, etc., may be executed on any number of processors of a general-purpose computer (such as the ones shown in **Fig. 12**). Furthermore, the system components may be realized either within a single computing device or spread out among several interconnected computing devices.

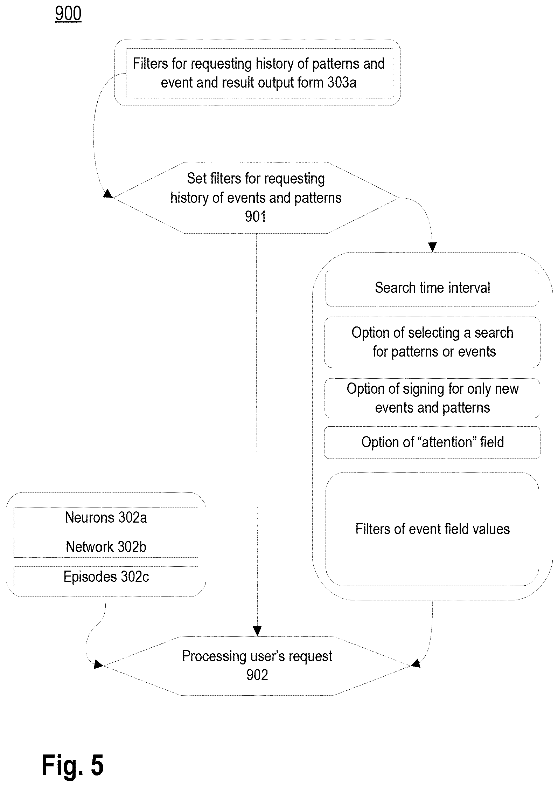

The system **300** receives events **500** directly from one or more of the following systems: CPS **100,** IS **400,** from anomaly detection tools in telemetry **200**. Events **500** come to the connectors for receiving events and providing information about anomalies and patterns **304** (hereinafter referred to as connectors **304**). Connectors **304** comprises software or software and hardware modules designed to receive events, that is, event data that includes for each event a set of field values and a timestamp of the event, as well as to provide information about anomalies and patterns. Moreover, the timestamp of the event can be both the time of formation of the event, the time of receipt of the event or another time moment characterizing the event. The connectors **304** may be implemented as services or processes running on the computer's hardware processor (see example **Fig. 12**). The system **300** may include a user interface **303** that allows you to monitor the activity of the neurosemantic network and query the history of events and patterns. Said history is stored in the neurosemantic network and in the storage subsystem **302** as a set of specially structured information (the structure is determined by the neurosemantic network) about events **500** and detected patterns, as well as about timestamps. Access to the history of events and patterns can be provided through the user interface **303,** an example of which is presented in **Fig. 5**. The storage subsystem **302** may be represented by memory (e.g., a memory **22** or a special file that stores a neurosemantic network bitwise compactly, or a database with special tables for storing neurosemantic network structures, etc.) and a data processing module in this memory, made, for example, on the computer's hardware processor.

The anomaly detection tools in the telemetry **200** (hereinafter referred to as the detectors **200**) receive telemetry data from the CPS **100** and transmit the identified anomalies in the telemetry as events to the system **300**.

In a particular example, the detectors **200** are configured as a predictive detector **202** based on machine learning (described, e.g., in commonly owned US Patent Numbers 11,494,252 and 11,175,976, which are incorporated by reference herein). Information about anomalies in the telemetry of the CPS **100** additionally includes such information about the anomaly in telemetry as the time of detection (also detection or triggering) of the anomaly in telemetry, the time interval for observing the anomaly in telemetry, the main parameters of the telemetry of the CPS **100** (hereinafter referred to as the CPS parameters) that contributed to the anomaly in telemetry - the names of the CPS parameters and their values at the time of detection or at the entire interval of the anomaly in the telemetry, and information about the method of detecting the specified anomaly in the telemetry in the detector **200**. In this case, the CPS parameters include the process parameters of the CPS (that is, the telemetry data of the CPS **100**). The event processor **301** processes the event stream **500** using a neurosemantic network and periodically stores the state of the neurosemantic network in the storage subsystem **302**.

In yet another particular example, the detectors **200** include a limit-based detector (the simplest kind of diagnostic rule **201**) that determines an anomaly in telemetry when the value of at least one CPS parameter from a subset of CPS parameters has gone beyond a predetermined range of values for said CPS parameter. It should be noted that the predetermined ranges of values may be calculated from the characteristic values or documentation for the CPS **100** or obtained from the CPS operator via a feedback interface, such as a user interface **303**.

In yet another particular example, the detectors **200** include a detector based on diagnostic rules **201** formed by: specifying a set of CPS parameters used in the diagnostic rule, and a method for calculating the values of the CPS auxiliary parameter, which is an indicator of the fulfillment of the criteria of this diagnostic rule. As a result, the diagnostic rules module determines an anomaly in telemetry in the CPS according to predetermined behavior criteria CPS parameters.

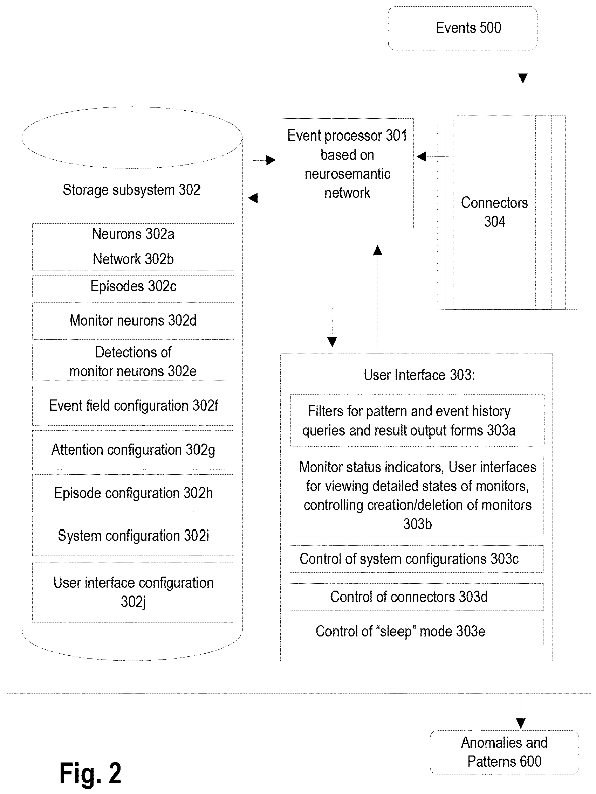

**Fig. 2** illustrates a diagram of the components of the pattern and anomaly detection system **300**.

In one example, the present system includes a key component which is an event processor that is based on the neurosemantic network **301**. The general principles of operation of the neurosemantic network are described in the works of Lavrentyev and Bodyakin mentioned above. The principles of using the neurosemantic network for event processing are explained in conjunction with **Fig. 2-11.**

In one example, the events **500** are received as an event stream from one or more of the following systems: system **100,** detectors **200,** or system **400** to connectors **304**. Event data **500** is represented as a set of field values and a timestamp. Field values may take categorical values or numeric values.

In one example, the event data is represented as a set of field values and a timestamp. The field values may be categorical values or numeric values. In a particular example, the event data is represented as a set of field values and a timestamp. The field values may be categorical values or numeric values.

In a particular example of connectors **304,** events **500** may be represented in Common Event Format (CEF). In another particular example, the numerical values of the event fields 500 may be converted to categorical (symbolic) values, for example, by sampling with a given accuracy. In another example, special layers may be embedded in the neurosemantic network that allow the user to compare different numerical values (see examples in Lavrentyev and Bodyakin mentioned above).

In one example, connectors **304** are also designed to generate (accumulate) episodes - limited in time and/or limited in number of events sequence from the entire stream of events **500,** consisting of at least one event **500**.

In one example, an episode is considered accumulated (formed) when one of the following conditions is met:

**1)** the accumulation time has reached the threshold specified in the system configuration **302i** (for example, 1 second) - in this case, the episode will include a sequence of events received during the specified accumulation time; and
**2)** the number of accumulated (received) events **500** has reached a threshold specified in the system configuration **302i** (e.g., 4096 events **500**) - in this case, the episode will include a sequence of the incoming number of events limited by a predetermined threshold.

In yet another example, an episode is considered to have been formed when the condition described above is met. For example, this variant of the accumulation of the episode may be advisable to use for the von Neumann system architecture and subsequent processing of input events.

In another example, when using massively parallel implementation of the hardware architecture, each individual event may be processed (when the episodes consist of a single event), which becomes appropriate when the capabilities of the hardware platform are sufficient to perform parallel processing of multiple events across all layers of the network.

In one example, the connectors **304** further transmit the generated episodes to the event processor **301**.

In one example, the event processor **301** processes the received episodes using the neurosemantic network and converts the events **500** into information about the creation and activation of neurons or the activation of previously created neurons of the neurosemantic network. Processing an episode involves recognizing previously learned neurosemantic network events and patterns and pattern structure, where patterns are sequences and elements (events or nested patterns) in which the order of the elements is observed, and the time intervals between the elements are within the specified constraints stored as neurons of the neurosemantic network, and the activation of these neurons is observed.

In addition, episode processing involves neurosemantic network training, which includes creating and activating neurons that map to new values of event fields, and recognizing new events, as well as new patterns so that previously learned and new patterns of the neurosemantic network cover all events of the episode.

In one example, all events of the current (currently processed) and previous episodes are covered in the most compact way in accordance with the principle of operation of the neurosemantic network - the hierarchical principle of minimizing the length of the description.

In one example, episode processing also involves assigning events and patterns corresponding to neurons in the neurosemantic network to anomalies based on the number of activations of the corresponding neuron.

In one example, the processing of the episode further includes identifying events and patterns that meet predetermined criteria, and generating output information (alerts) about said events and patterns, through the use of special neuron-monitor neurons of the neurosemantic network that monitor (by activating monitor neurons) the cases of creation and activation of neurons corresponding to events and patterns, wherein the criteria are specified at least:

- on the values of the fields of individual events and events in the patterns;

- a sign of the recurrence of such events and patterns; and

- on a sliding time interval to track such activations and the number of such activations over a sliding time interval.

In other examples, it is possible to preserve the facts of detection of such events and patterns as the history of alerts that meet the specified criteria.

The event processor **301** serves to recognize the hierarchical nesting of patterns (pattern structure) through a hierarchy of layers of the neurosemantic network on which neurons are located, and on the zero (terminal) layer there are neurons of event field values grouped by channels corresponding to event fields, on the first layer there are event neurons, on the second layer there are patterns consisting of events, on the third (if any) and higher layers (if any) there are patterns consisting of patterns of the previous layer (nested patterns).

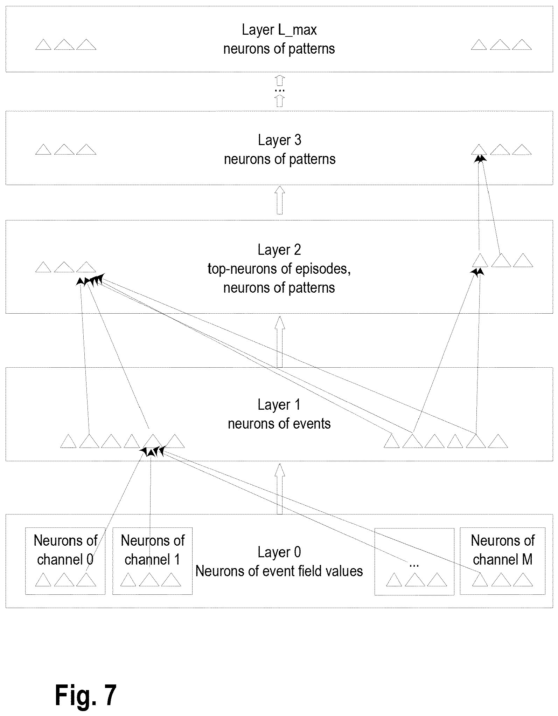

The results of the episode processing, in particular information about the creation and activation of neurons, the event processor **301** stores as part of a neurosemantic network in the storage subsystem **302** in the form of neurons **302a**, a network **302b** (neural connections), as well as a linear from time, but compactly presented part of the information about the composition of the episode **302c** (as a single-activated neuron for each episode with exact intervals between events - see e.g., **Figs. 7-10**).

Additionally, the storage subsystem **302** stores:

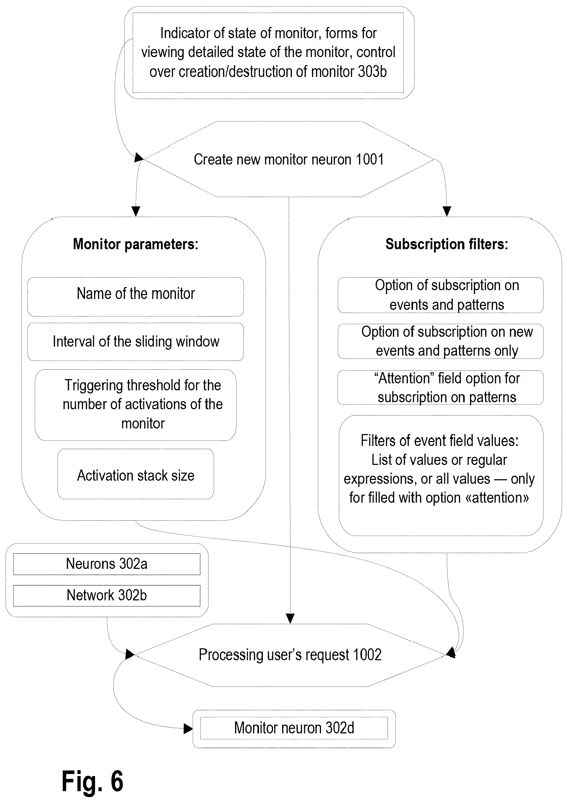

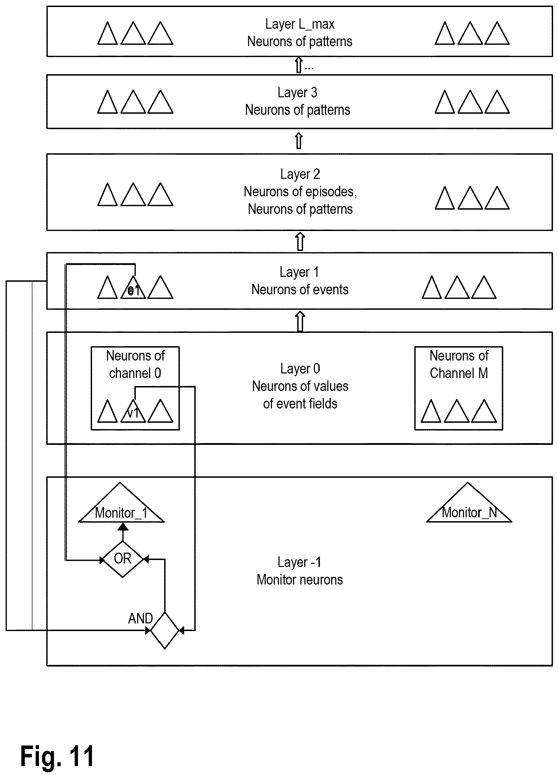

- information about special neurons of the neurosemantic network, designated as **302d** monitor neurons (see Figures **6, 11** for details);

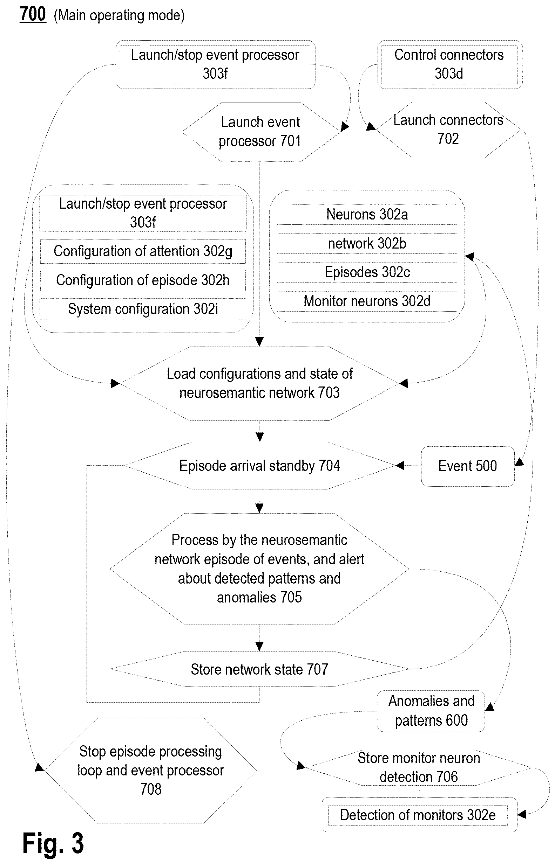

- information about patterns and anomalies **600** detected by monitor neurons **302d** - detections of monitor neurons **302e** (see **Figs. 3, 6, 11** in more details);

- event field configuration information **302f;**

- attention configuration information **302g** (see **Figs. 6, 11** for details);

- episode configuration information **302h;**

- information about the system configuration **302i,** including information about the hyperparameters of the neurosemantic network (for example, the number of layers, the number of neuron inputs on each layer); and

- information about the configuration of the user interface **302j** (described in more detail below).

In one example, prior to the start of the system **300,** a start configuration of the system **300** may be determined, comprising certain configurations **302f-302i** at the time of the start of the system **300.**

In one example, the system **300** may include a user interface **303** that comprises the following elements according to configuration **302j:**

- filters for specifying pattern and event history queries and result output forms **303a** (see e.g., **Fig. 5** for details);

- monitor status indicators (functionality that provides the ability to monitor) based on monitor neurons **302d,** user interfaces for viewing the detailed state of monitors, controlling the creation of new and deleting previously created monitors **303b** (see e.g., **Fig. 6**);

- controls of system configurations **303c** (controls **302f, 302g, 302h, 302i**);

- connector controls **303d** (see e.g., **Fig. 3,** action **702**); and

- controls for the cycle of operation of the system **300** in the "sleep" mode **303e** (see more **Fig. 4**).

In one example, using the user interface **303** allows a user to monitor the activity of the neurosemantic network and make queries on the history of events and patterns.

**Fig. 3** illustrates an exemplary method of a main cycle of an operating mode **700** of the pattern and anomaly detection system **300.**

In step **701,** method **700** launches event processor **301.** In one example, the event processor **301** is launched in response to a user action. The user action for launching the process may be performed directly or indirectly. For example, the process may begin with the launch of the event processor **301,** which can be performed by the action of the user **303f** (directly or indirectly - by specifying the appropriate system configuration **302i** at the time of start of the system **300**).

In step **702,** method **700** launches connectors **304.** The receipt of events begins with the launch of the connectors **304,** which, for example, can be initiated by the user (by controlling the connectors **303d** - directly or indirectly through the configuration at the start of the system **300**). Upon accumulation of the episode and after the event processor **301** is in standby mode (see e.g., step **704**), events **500** may be transmitted to the event processor **301.**

In step **703,** method **700** loads configuration and state of neurosemantic network into memory from a storage subsystem, e.g., the storage subsystem **302** (for example, from random access memory **25** in **Fig. 12**) of the neurosemantic network. In one example, the loading of the configuration and state of neurosemantic network may include configurations of event fields **302f,** configurations of attention **302g,** configuration of the episode **302h,** system configuration **302i,** as well as the previous state of the neurosemantic network: neurons **302a,** network **302b,** episodes **302c,** monitor neurons **302d.** After loading the configuration and state of neurosemantic network into memory, the method proceeds to step **704.**

In step **704,** method **700** the event processor **301** enters an episode arrival standby mode.

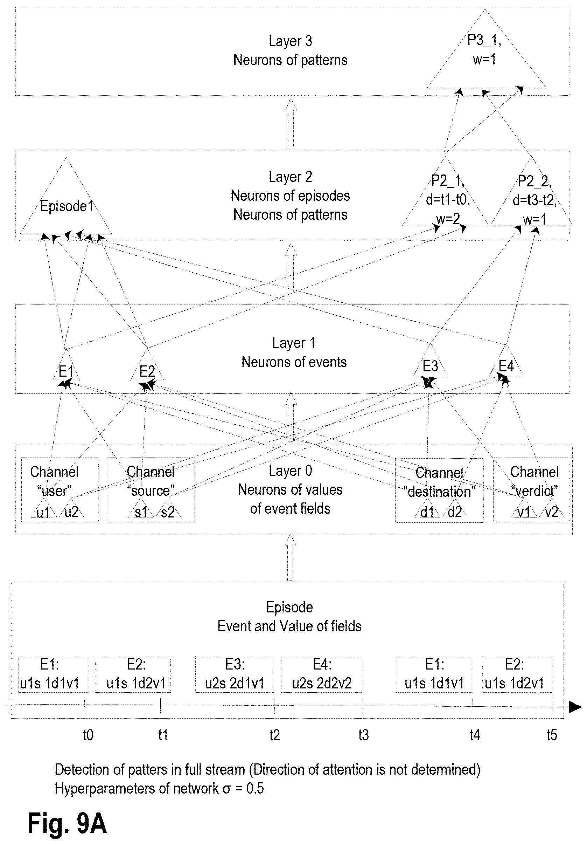

In step **705,** method **700,** by the neurosemantic network of the event processor **301,** processes episode of events, generates alerts, by monitor neurons **302d,** about detected patterns and anomalies. These processes are further described in more detail in conjunction with the descriptions of **Fig. 9a-11.** If the condition for the formation of alerts by the monitor neuron **302d** is met during the processing of the episode (see e.g., **Figs. 6, 11**), then in the user interface **303** of the monitor **303b,** the method updates the corresponding trigger indicator of the monitor neuron **302d** corresponding to monitor neuron **302d** on the current sliding window, sends an anomaly or pattern alert **600** to external subscribers of the CPS **100** and IS **400** (for example, a remote server, other CPS or IS associated with the specified ones), and proceeds to steps **706** and **707.**

In step **706,** method **700** stores the monitor neuron detection. For example, store the detection of a monitor neuron **302e,** in the storage subsystem **302.**

In step **707,** method **700** stores the state of the network. For example, upon completion of step **705,** the state of the network is stored in step **707.** The state of the network may include updated information about neurons **302a,** network **302b,** episodes **302c,** and monitor neurons **302d** in the storage subsystem **302.** Method **700** returns to step **704** to repeat steps **704, 705** and **707** until the event processing is terminated, for example, in response to a user request. For example, a loop consisting of steps **704, 705, 707** is repeated until the event processor **301** stops at step **708.**

In one example, method **700** receives a loop stop call from a user through the user interface **303.** In another example, a call to stop the main loop may be made by the system **300** in accordance with the "sleep" mode configuration specified in the system configuration **302i.** In another example, the main loop may be stopped when the entire system **300** is stopped.

In one example, the storage subsystem **302** further serves to provide the ability to restart the operation of the event processor after a shutdown while storing previously learned events and patterns.

In one example of the storage subsystem **302,** it is possible to store the state of the neurosemantic network in a special bit-coded file that reflects the basic principle of operation of the neurosemantic network - the minimum length of the description (see Lavrentyev mentioned above).

**Fig. 4** illustrates an example of operation of the system **300** in a "sleep" mode **800** of components of the pattern and anomaly detection system in accordance with examples of the present disclosure. The "sleep" mode allows users to optimize the large-scale structure of the neurosemantic network and identify patterns and anomalies **600** at large intervals, which can be difficult in real-time event processing mode. Such optimization requires additional ordering of events. In one particular example, this may be a repeated summary treatment of previously processed short episodes. In another particular example, this may be the processing of episodes for which late events were subsequently received that came in other episodes, but with timestamps that are within the time limits of events from previously processed episodes. In the third particular variant, due to a change in the direction of attention, it may be necessary to re-process part of the history of the episodes in order to search for patterns with new directions of attention. These options are presented as an example and do not limit the possibility of using the "sleep" mode to optimize the large-scale structure of the neurosemantic network.

The sleep mode **800** operates in a loop (the terms "loop" and "cycle" are used interchangeably herein). In a particular example, the episode history interval specified as part of the configuration of the system **300** is processed in one cycle. For example, if the episode size is set as 4096 events or 4 seconds of waiting, the interval of one cycle of the "sleep" mode can be equal to 100 episodes and cover the story interval of 400 seconds of time clock by the data source.

Another set of parameters in the system configuration **302i** of the system **300** are parameters that determine when and for how long the system **300** can go into "sleep mode". In one particular example, this may be the time of day when the flow of events is least intense (for example, in the period 01 :00-06:00), and for the duration of the loop in sleep mode, it is possible to suspend the main mode **700** of processing real-time events. In this case, events **500** can be temporarily accumulated in the connectors **304** for the purpose of their subsequent processing after exiting the "sleep" mode. In another particular example, when the computing resources of the system **300** there is enough to process the stream of events in real time, part of the resources can be transferred to the parallel execution of cycles in the "sleep" mode.

In step **801,** method **800** selects a next interval of episode history. Thus, the sleep mode cycle **800** begins by selecting the next interval of episode history.

In one example, the system **300** may remember the end of the previous interval of the cycle in sleep mode and start a new cycle in sleep mode with the subsequent interval. In another example, the system **300** may retain signs of those episodes that, for various reasons (for example, at the request of the user), should be optimized. In one example, an indication of the need to optimize an episode is too few events in an episode received in real time. In another example, an indication of the need to optimize an episode may be a change in the direction of attention of the user. In another example, an indication of the need to optimize an episode is a small number of events in the episode in one or more areas of attention.

In step **802,** method **800** makes transition of monitor neurons, e.g., monitor neuron **302d,** into sleep mode. The monitor neurons are configured to distinguish between the data sources on which patterns and anomalies are detected. If a pattern or anomaly is detected at a history interval reprocessed in sleep mode, the alert is not generated or is generated only for exceptional cases, for example, associated with patterns identified at long intervals of time or in new areas of attention. If the patterns are highlighted in the real-time mode (the main method **700** for processing events) in parallel with the method **800** of the "sleep" mode, then the alert is performed.

In step **803,** method **800** optimizes large-scale structure of the interval of the history of episodes and patterns of the neurosemantic network. For example, the events **500** received at this interval are reprocessed, combining them into longer, optimal episodes for this object and neurosemantic network. For instance, episodes of 4 seconds that received 100 events are combined into long episodes of 4096 events or, if the total number of events in the interval is less, the number of events available at the interval is combined. Note that the optimality of the number of 4096 elements in the episode of the neurosemantic network is explained in the work of of Lavrentyev mentioned above. Also, at the interval, patterns are reprocessed. The reprocessing takes into account the current configuration of attention **302g.** In the process of restructuring patterns, the neurosemantic network can detect more optimal patterns, as well as patterns covering longer periods of time. Pattern optimality is a key characteristic of the neurosemantic network (see more in Lavrentyev and in **Fig. 7** ) and is determined by the attributes of the neuron corresponding to the pattern, and primarily by the following attributes: the number of activations ($w$), the number of nested patterns or events ($k$) that make up the pattern and the number of their activations ($wp$), the number of field values of all events of the pattern ($l$) (see more in the work of Lavrentyev mentioned above).

In step **804,** method **800** stores the state of the neurosemantic network. The state of the neurosemantic network is stored after optimizing the history interval (neurons **302a,** network **302b,** episodes **302c,** monitor neurons **302d** while taking into account their sleep mode).

In step **805,** method **800** transitions the monitor neurons to the main mode. For example, the monitor neurons **302d** returns to the main mode. The method then proceeds to step 801 to repeat the sleep cycle.

In step **806,** when a control message for stopping the sleep cycle is selected, method 800 stops the cycle and exits the "sleep" mode. In one example, the control for stopping the sleep cycle occurs according to the selected control of the "sleep" mode **303e.**

Note that at steps **705** (episode processing) and **803** (optimization of large-scale interval structure), an operation can additionally be performed to periodically delete rarely used neurons of the neurosemantic network (not displayed in **Figs. 3** and **4**) corresponding to some patterns that were created on some layer, but were not used in covering the episode (coding) on this layer of the neurosemantic network, because the neurosemantic network has identified other patterns that better cover the observed sequences of events (for example, those that are more common in the flow of events and are therefore advantageous for minimizing the length of the description of the entire information flow, i.e. to fulfill the basic principle of encoding information in a neurosemantic network (see Lavrentyev mentioned above). This operation allows user to optimize the volume of neurons in the network and, accordingly, significantly reduce the resource requirements of the storage subsystem **302,** without losing a significant part of the statistical information on events and patterns in history.

**Fig. 5** illustrates an exemplary method **900** for processing user requests for history of patterns and anomalies for system **300** in accordance with examples of the present disclosure.

The user interface **303** of the system **300** provides filters for requesting history of patterns and events, as well as result output forms **303a.**

A user of the system **300** (e.g., a CPS or IS operator) may set filters for requesting history of events and patterns at step **901.** To do this, the user:

- specifies the search time interval;
- specifies whether he searches for individual events or patterns;
- specifies whether he is interested only in new events or patterns or those that have been activated several times;
- when querying for the history of patterns, specifies the "attention" option for at least one field from the composition of those fields that are specified in the configuration of the directions of attention **302g;** when querying for the history of events, the "attention" option is not indicated; and
- defines the desired filters of values of fields of individual events or events occurring in patterns; the filter can be specified by a list of desired values or by a regular expression; additionally, the "all values" filter option may be selected for the field with the "attention" option when searching for patterns - in this case, the values that are defined in the attention configuration **302g** for this field for the system **300** will be used.

In step **901,** method **900** sets filters for requesting history of events and patterns.

In step **902,** by the system **300,** method **900** processes the user request using the stored states of neurons **302a,** network **302b,** episodes **302c,** and gives the user a result containing the found events and patterns, with the ability to indicate the corresponding numbers of neurons, numbers of their activations, and dates of the last activation. In the case of patterns of layers 3 and above, the neurosemantic network (see **Fig. 7** - **10**) for the pattern indicate its constituent nested patterns of the previous layer, which in turn can be recursively expanded to the events that make them up and the values of the fields of these events. In one particular example, the results of step **902** may be presented in table view; the table view of the user specifies the configuration of the user interface **302j.**

In another particular example, the result of the event search may be represented as a directed acyclic graph, for which the user specifies the configuration of the event fields **302f,** in which he indicates the semantic relationships of the fields: which event fields are considered the beginning of the graph, which are internal vertices, and which are the final vertices of the graph. For example, for a particular version of the fields: "user", "computer" of the user, "system" to which the user refers, and the "verdict" received for this appeal - the nodes of the relationship graph can be built on the principle: 1) which "user", 2) from which "computer", 3) which "system" turned to and 4) which received the "verdict". Possible results views are not limited to the examples above.

**Fig. 6** illustrates an exemplary method **1000** for processing user requests for creating a new monitor neuron **302d** during an operation of an anomaly detection system **300.**

The user fills out the form **303b** of the user interface **303** to create a new monitor, while the monitor is stored in the system **300** as a monitor neuron **302d.** To do this, the user fills in the following monitor parameters:

- the name of the monitor that the user can understand.
- sliding window interval - the monitor neuron **302d** on a given sliding window counts the number of its activations;
- triggering threshold for the number of activations of the monitor neuron **302d** on the sliding window - when this threshold is exceeded, the monitor neuron **302d** generates and sends an alert about the detected patterns or anomalies of the self, which the system **300** delivers to the external systems of the CPS **100** and the IS **400,** and also stores it in the storage subsystem **302** in the form of a detection of a monitor neuron **302e;** and
- activation stack size - the stack capacity in which the monitor neuron **302d** will temporarily store information about recent events or patterns that activated the monitor neuron **302d,** and the time of activation.

The user may also set subscription filters that define the conditions under which the monitor neuron will be activated:

- determines whether the monitor neuron **302d** will be subscribed to individual events or patterns;
- determines whether the subscription will only be to new events or patterns, or to events or patterns that have happened before;

- defines fields with the "attention" option: a) for subscribing to patterns, at least one field with the "attention" option must be specified if attention directions are specified in the configuration of the system **300,** b) for subscribing to events, the "attention" option may be specified for one or more fields, forming an arbitrary temporary attention configuration for the subscription of the monitor neuron **302d** on events (patterns on the temporary configuration of attention are not built). For each new combination of the values of such fields, which determines a separate direction of attention, the monitor neuron **302d** creates a child monitor neuron **302d,** which will count activations for events only for this particular direction. Activations of child monitor neurons **302d** transmitted by the neurosemantic network to the parent monitor neuron **302d.** For the convenience of the user, the child monitor neurons **302d** may be hidden from the user, and the user will learn about their activations through the parent monitor neuron **302d.** This mechanism allows you to organize the monitoring of events for many values of fields that may be unknown in advance, while not cluttering the user interface **303.** For example, in one particular version of the configuration of the event fields of the monitored object, containing the fields: "user name", "user host", "user request server", "server verdict on user request" - and when setting the "attention" option for the "user name" field for the event monitor, the monitor neuron **302d** will be able to track events for each individual user (keep a separate count of the number of activations for each user), while users may be unknown in advance, because new users may appear on the monitoring object; and

- defines the desired filters on the field values of individual events or events encountered in patterns. A filter can be specified by a list of desired values or by a regular expression. Additionally, for the field with the "attention" option when searching for patterns, the "all values" filter option can be selected - in this case, the field values that are defined in the attention configuration **302g** for this field for the system **300** will be used.

In step **1001,** method **1000** creates a new monitor.

In step **1002,** by the event processor **301,** method **1000** processes the user's request to create a monitor neuron based on information about the neurons **302a** and the network **302b,** and a special monitor neuron **302d** is created. When the system **300** is operating in the main cycle or in the "sleep" cycle, the neurosemantic network of the event processor **301** activates the monitor neuron **302d** according to his subscriptions (see example in **Fig. 11**).

In order to add clarity, the application of the neurosemantic network for event processing is described below in conjunction with **Fig. 7.**

## Neurosemantic Network Appliance for Event Processing

In one example example, the neurosemantic network may be multilayered. The numbering of the main layers of the network begins with 0 and ends with L_max, where L_max is specified as the hyperparameter of the neurosemantic network. Event processing is performed precisely on the main layers of the network. There is also a layer -1 (minus one) on which special monitor neurons **302d** are located (not displayed in **Fig. 7,** see more **Fig. 11**). It should be noted that this numbering is introduced for certainty of presentation and corresponds to the numbering adopted in Lavrentyev. Without losing the generality of the claims, the layer numbers can be assigned in another way, in as long as only the sequence of layer connections.

The neurons on each layer 1 through L_max have inputs only from the neurons in the previous layer. The inputs of the neurons in layer 0 and layer -1 are formed differently, see below.

Layer 0 is called terminal layer. On it are terminal neurons, which are activated by the values of event fields. Terminal neurons activated by different values of the same event field are grouped on the terminal layer by channels, i.e., the channel of the neurosemantic network is put in correspondence to the field of events. Thus, the neurosemantic network has as many input channels as the fields defined in the event. In a particular use case of a neurosemantic network, each terminal neuron has only one input that corresponds to one value of the field to which this neuron is activated.

The monitor neurons **302d** of the -1 layer, unlike the neurons in the other layers of the neurosemantic network, have inputs that can connect these neurons to the outputs of neurons of any layer, as well as to the outputs of the layers of the neurosemantic network. The inputs of the **302d** monitor neurons that connect them to the outputs from the layers of the neurosemantic network allow the monitor neurons **302d** to subscribe to the creation of new neurons on these layers (see e.g., **Fig. 11**).

The channels and terminal neurons of these channels serve as inputs to the neurosemantic network. Monitor neurons **302d** serve as outputs from the neurosemantic network.

Layer 1 contains neurons that correspond to events. Event neurons have inputs in numbers no greater than the number of channels (event fields). Each event neuron input is associated with a single terminal neuron, with all event neuron inputs associated with terminal neurons from different channels.

Layer 2 contains neurons that have events as inputs: these are neurons of episodes of the history of events (or neurons of episodes) and patterns (or neurons of patterns).

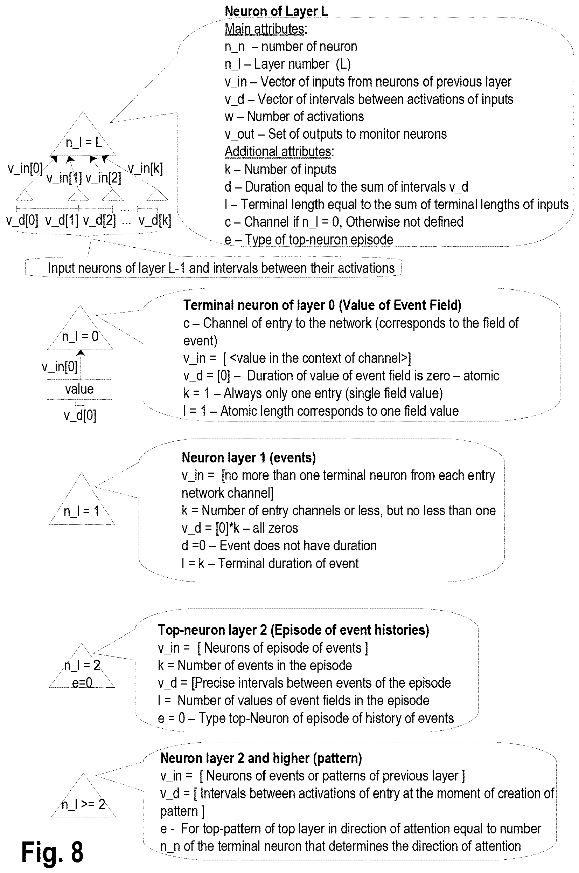

The neuron of the episode is created by the neurosemantic network when the next episode is fed to its input and its subsequent processing. The episode neuron has a number of inputs equal to the number of events in the episode. The inputs of the episode neuron allow you to restore the exact history of events, because when the neurosemantic network creates an episode neuron in its composition, the exact intervals between the arrival of events that make up the episode are preserved (see e.g., **Fig. 8**).

Pattern neurons correspond to sequences of events. In one example, in the second layer, the pattern neurons have inputs from the corresponding event neurons on the first layer. In one example, on layer 3 and above, there are also neurons of patterns, but they have as inputs neurons of patterns of the previous layer. Thus, in order to obtain a sequence of events corresponding to the pattern of layer 3 and above, it is necessary to recursively "expand" each input of such a neuron up to the inputs from layer 1 (the event layer).

In a particular example of the neurosemantic network, the pattern neurons retain the exact sequence of inputs from the neurons of the previous layer (the neuron is sensitive to the order of inputs). However, the intervals between neuron inputs allow variations: for example, if, when creating a neuron, the total duration of the intervals between activations of its inputs (hereinafter referred to as the duration of the neuron) was equal to d, then such a neuron can correspond to the same sequence of events or patterns, but with a total duration within a given interval, for example, equal $d \cdot [\max(0, 1 - \sigma), 1 + \sigma]$, which depends on the duration of the neuron pattern $d$, and the network hyperparameter $\sigma > 0$.

In another particular example of the neurosemantic network, the allowable interval of variation in sequence duration (to match the neuron of the duration pattern $d$) may be determined by a metric of the neuron's proximity to the observed sequence, e.g., based on the Gaussian distribution of the duration of the pattern $\sim e^{-d^2/\sigma^2}$.

In another particular implementation, the proximity metric of the order of inputs can also be determined (see the works of Lavrentyev and Bodyakin mentioned above). In the layers of the neurosemantic network, when processing episodes by the event processor **301,** new neurons are created and then activated if event field values, events, and sequences of events that have not previously occurred occur in the episode. Otherwise, activation of previously created neurons occurs (taking into account allowable variations in intervals).

The choice of certain sequences for the formation of patterns is determined by the hierarchical principle of the hierarchical Minimal Discrepancy Length, see the work of Lavrentyev and Bodyakin, mentioned above, and in a particular version of the implementation of such a principle - on the basis of the functional of the "force" of the neuron, see the work of of Lavrentyev.

For example, a pattern that corresponds to a neuron on the second layer can be created from neurons on the first layer that correspond to episode events. To do this, a sliding window is passed, for example, from 2 to 8 events (network hyperparameters), from the sequence of events of the episode and for each window that occurs for the first time, a new pattern neuron is created on the second layer. Then all the neurons, those corresponding to such windows (newly created or previously created in previous episodes) are sorted according to their statistical properties (frequency of occurrence on the entire stream, length in terms of event fields and other criteria - see the "force" functionality in the work of Lavrentyev mentioned above). Sorted neurons are used to fully cover the sequence of events of the episode, starting with the "strongest" neurons at the beginning of the list. Those neurons that are not used in such coverage are considered less optimal than those used, and can be removed to save network resources in whole or in part (in the latter case, some of the unused of the composition the neurons sorted as described above are stored and activated when they are detected in the flow of events in the expectation that in another episode, they may be more optimal). The patterns of subsequent layers of the neurosemantic network are formed in a similar way, but the input sequence for them will not be events, but patterns of the previous network layer for the current episode.

At the first start of the event processor **301,** the neurosemantic network has only three layers without neurons: 0, 1, 2. When events arrive at the input of the neurosemantic network and their layer-by-layer processing, new neurons and layers from 3 to L_max are added to the network - as the corresponding neuron patterns appear, as well as layer -1 - when the user adds monitor neurons.

**Fig. 8** illustrates main characteristics of a neuron in a neurosemantic network and application of the characteristics for event flow analysis based on episode processing. Thus, **Fig. 8** shows the neurons of the neurosemantic network and their correspondence to field values, events, episode histories, and patterns.

The general attributes of a neuron in a neurosemantic network are shown in the example of a neuron in layer L. A neuron is identified by the number of the neuron and the number of the layer. The main attributes comprise:

- **_n_n_** is the number of the neuron;
- **_n_l_** is the layer number (for layer *L*, **_n_l_** *= L*);
- **_v_in_** *is the* vector of inputs from the neurons of the previous layer;
- **_v_d_** is a vector of intervals between activations of inputs (what these intervals were when this neuron was created);

- **w** is the number of activations of the neuron; and
- **v_out** - a set of outputs to monitor neurons.

In addition, there are a number of other important attributes such as:

- **k** is the number of inputs that is limited by the hyperparameters of the upper and lower limits of the number of neuronal inputs on each layer of the neurosemantic network specified as part of the system configuration **302i,** by default, for example, the interval [2, 8];
- **d** is the duration equal to the sum of the intervals **v_d**;
- **l** is the terminal length equal to the sum of the terminal lengths of the inputs;
- **c** is the channel if **n_l** = 0, otherwise not defined; and
- **e** is the type of top neuron, if it is an episode or a top pattern, otherwise not defined.

The definitions of the episode top neuron and the top pattern are presented below. In addition, explanations of the above attributes are provided below.

On the layers of the neurosemantic network, when processing sequences of events that come in the form of episodes, the neurosemantic network creates and activates new neurons or activates existing neurons. All events of the episode (neurons of layer 1) are combined by the neurosemantic network into one top neuron of the episode on the second layer of the network.

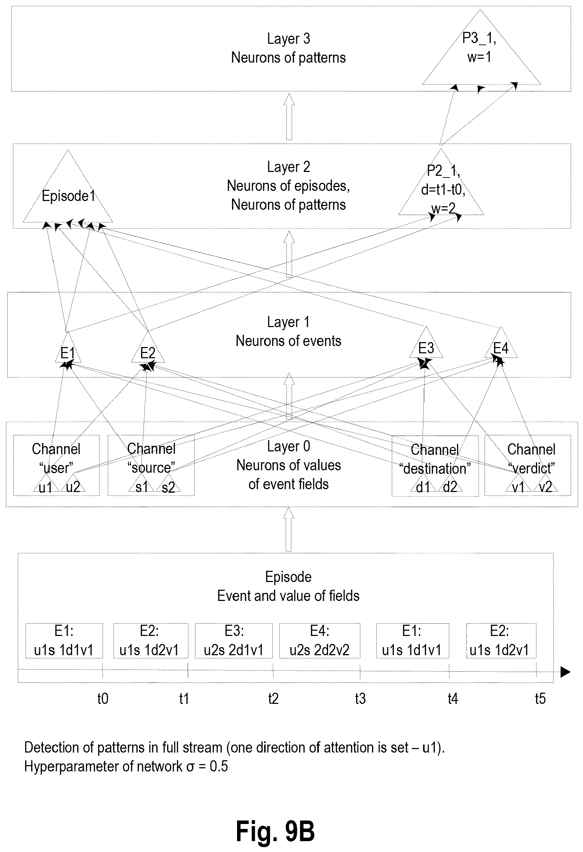

In addition, if the directions of attention are defined (see e.g., **Fig. 9b**), then the identification of patterns occurs from the sequences of events obtained from the full sequence of events of the episode by filtering only events containing field values corresponding to their direction of attention. For each such filtered sequence of events on some layer of the neurosemantic network, all the identified patterns are combined into top-pattern (or in several top-patterns for the case when the maximum possible layer of the network is reached, but the coding did not reduce the episode to only one top neuron; the latter is characteristic of the event stream containing long repetitive sequences, which, when encoded, lead to repeating patterns on each layer of the network, which it is advisable to leave without combining them into even more long patterns).

For top neurons (top neurons of episodes and top patterns), a special attribute **e** is defined. For the top pattern, this attribute determines the correspondence to the direction of attention. For the top neuron of the episode, this attribute has the value of 0. For neurons that are not top neurons, attribute e is not defined. It should be noted that the choice of specific values of this attribute may be different, only the principle of correlating the top-neuron with the top-neuron of the episode or with the top-pattern in the direction of attention is important.

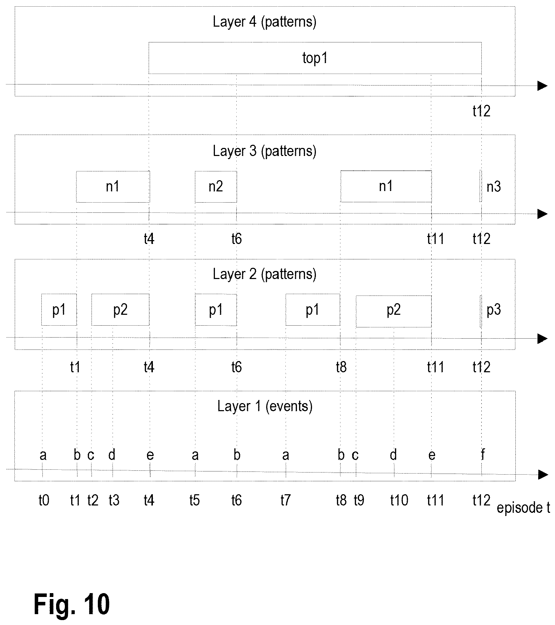

The first interval **v_d[0]** in the **v_d** vector of the neuron is usually zero. If it is a neuron of layer 0 that corresponds to the value of the event field, then it has one input of zero duration, because the value of the event field has no duration. If it is event, then the inputs correspond to the values of the fields and the intervals between them according to the definition of the event adopted in the present disclosure are zero. If it is an episode neuron event history or neuron pattern, then the neuron itself contains information only about the intervals between activations of its inputs, and information about what happened before the activation of the first input for such a neuron is not contained in the neuron itself. However, for the latter statement there is an exception associated with the possibility of the existence of "transitional" neurons-patterns, which have only one input. The semantic meaning of the "transitional" neurons is explained in the work of Lavrentyev mentioned above. These neurons "transmit" the pattern of the previous layer to the current layer. At the same time, the duration of the transmitted pattern of the previous layer is known and it determines the first interval **v_d[0]** of the only input of the "transitional" neuron. This feature is explained in conjunction with **Fig. 10.** This approach allows the user to save all the time intervals between the events of the episode when sequentially mapping (encoding) the neurons of the patterns on the layers of the neurosemantic network.

The rule that the first interval is zero should be taken into account when understanding the meaning of the duration **d** of the neuron of the pattern. For neurons of layer 3 and above, in general, **d** is not equal to the duration of the sequence of events corresponding to this neuron and obtained by opening the neuron to layer 1, because the first input will also be a pattern that has its own duration, and the duration of the first nested pattern is not taken into account in the duration **d.** A neuron "knows" the intervals only between activations of its inputs, but "does not know" what happened before the activation of its first input (the neuron of the first nested pattern "knows" about this).

It should be noted that for patterns identified in a given direction of attention (see e.g., **Fig. 9B**), on layer 1, only those events that correspond to the direction of attention are selected by the network from the full sequence of events of the episode. Accordingly, the intervals are counted between the selected events.

The above is formalized as follows:

- if (**L = 0**) or (**L = 1**) or (**L > 1** and **k > 1**), then the interval **v_d[0] = 0**; and
- if (**L > 1**), and e does not point to the top neuron of the episode (i.e., it is a neuron of a pattern or top-pattern), and

(**k** = 1), then the interval **v_d[0]** is equal to the duration of the neuron of the layer (**L** - 1).

The upper bound of the number of inputs of a neuron **k** is the hyperparameter of the neurosemantic network layer. The greater the **k,** the faster the sequence of events will be encoded into one top pattern of some layer. For a smaller upper bound **k**, more layers of the neurosemantic network will be required for such coding. The minimum encoding speed corresponds to the lower bound **k** = 2. In addition, it is noted above that there may be "transitional" neurons with **k** = 1. In a particular application of the principle of learning a neurosemantic network due to the hierarchical minimization of the length of the description in Lavrentyev. If, during the processing of the episode on some layer it turned out that all the neurons-patterns have just been created, i.e., activated only once on a given episode, and therefore all **w** = 1, then the network "folds" them into one top-pattern of the episode on the next layer, and the number of inputs from such a top-pattern can exceed **k** (see more work in Lavrentyev). Similarly, the top neuron corresponding to the episode can have a value of the **k** attribute above the boundary specified for layer 2.

The **l** attribute is the terminal length of the neuron, which in the proposed approach corresponds to the number of field values in the entire sequence of events corresponding to the neuron. It should be noted that some events may not have all the values from the full set of fields, respectively, the terminal length of such events will be less than that of events with a full set of fields.

The **v_out** attribute is used by the neurosemantic network to alert monitor neurons (see **v_out** in **Fig. 11**) on the minus first layer (-1) of networks subscribed to the activation of this neuron.

A particular version of the terminal neuron is shown in **Fig. 8.** As already indicated, the terminal neuron in the proposed use of a neurosemantic network to process events has one input **k** = 1. And the value of this input **v_in[0]** is the value of the event field. Attribute c is equal to the channel number corresponding to the field of this value. The duration of the time of the field value is zero: **v_d[0]** = 0. And the terminal length is unit (one value) **l** = 1.

Another particular version of the neuron in **Fig. 8** is presented for an event neuron on layer 1. The number of inputs **k** of such a neuron is at least one and the maximum is equal to the number of fields defined in the configuration of the system **300**. All values of the event fields occur simultaneously, so the vector **v_d** contains **k** zeros and the total duration of the event is also zero **d** = 0. The terminal length of the event is equal to the number of field values, i.e., **l** = **k**.

Another particular version of the neuron in **Fig. 8** is presented for the top neuron of the episode. In this case, **k** is equal to the number of events in the episode. The inputs of the **v_in** neuron indicate the neurons of the episode event in the order in which they occurred in the episode. It should be noted that if the same event enters the episode several times, then the corresponding elements of **v_in** indicate the same neuron event. The vector **v_d** contains the exact time intervals between events. The first interval **v_d[0]**, corresponding to the first event in an episode, is zero, because at the level of the episode neuron, it is not known what happened before the first event of the episode. For the top neuron of the episode, the feature e = 0 is created. Also, as mentioned above, for each episode this part of the neurosemantic network grows linearly over time, but is actually a time-ordered set of links (inputs) to the neurons of events, allowing the history of events to be fully reconstructed.

Another particular variant of the neuron in **Fig. 8** is presented for a pattern neuron on layer 2 or higher. The **v_in** input vector indicates events or neurons of patterns of the previous layer of the neurosemantic network. The vector **v_d** corresponds to the intervals of activation of inputs at the time the neuron of the pattern is created. The number of inputs of the regular pattern **k** is, for example, in the interval [2, 8] (hyperparameters of the neurosemantic network layer). For a top pattern, the number of inputs k can be above the upper bound. Unlike the top neuron of an episode, where all intervals between events are exactly stored in the vector **v_d**, for a neuron of the pattern vector **v_d** contains the intervals between inputs as they were when the neuron was created. If a sequence of events with an order of events similar to the one that was when the neuron was created but a sequence duration that does not coincide with that of neuron **d** is encountered in the event stream, the pattern neuron can still be mapped to that sequence (i.e., activated) if the sequence duration is within some valid interval specified, for example, how_$d \cdot [max(0, 1 - \sigma), 1 + \sigma]$, where $\sigma > 0$ is a hyperparameter of the neurosemantic network.

Thus, the episode is sequentially processed on the layers of the neurosemantic network: by matching the values of the event fields of terminal neurons, by matching the events of the neurons of the first layer, by creating neurons of top-episodes on the second layer, by matching the sequences of events of the neurons of the patterns on the second and higher layers up to the layer on which one neuron of the top-pattern will be mapped or the maximum layer will be reached.

In one example, neuron mapping during processing is performed by activating a neuron of the corresponding layer if it is found (recognized), or by creating and activating a new neuron if a new field value, event or pattern is observed, depending on the layer.

The above method of creating neurons allows one to partially stop learning the neurosemantic network by forcing a transfer to a mode where the creation of new neurons does not occur, and all network training occurs only by changing the neurons when they are activated (the attribute of the neuron w, which is responsible for the number of activations, changes).

In another example, this method of processing episodes allows one to train the neurosemantic network by "supervised learning (training with the teacher)" due to the special submission of target (presented by the teacher) patterns to the input and the subsequent modification of the **w** attribute formed for these patterns of neurons, assigning it a sufficiently large value. This allows increasing the priority of this neuron when it is recognized on the stream compared to other neurons corresponding to other patterns (see the explanation above about the sorting of neurons when covering the episode), thus the recognition of the pattern presented by the teacher is guaranteed.

Fig. 9a illustrates an exemplary of a treatment of an episode by a neurosemantic network for a case where the direction of attention is not determined. Thus, **Fig. 9A** shows an example of how to handle an episode. In this example, no direction of attention is defined, and patterns are constructed from all events. The diagram shows that the sequence of two events $E1\text{-}E2$ occurs twice, but at different time intervals. However, for the hyperparameter value used in the example, $\sigma = 0.5$ duration of the second pair of events $E1\text{-}E2$ is within the interval and the same pattern $P2\_1$ is activated on both pairs $\left[\sigma/2, 3\sigma/2\right]$.

Fig. 9b illustrates an exemplary method for processing episodes for a case where one direction of attention is defined. Thus, **Fig. 9b** shows an example of episode processing modified from **Fig 9A:** one direction of attention being defined to correspond to the value *"ul"* of the *"user"* field. Accordingly, the event processor filtered only events with a value of the *"user"* field equal to *"ul"* from the full input sequence to search for patterns, and created on layer 3 the top pattern $P3$ 1, which has two inputs, each pointing to the same pattern $P2\_1$ of layer 2.

Fig. 10 illustrates an exemplary method for processing intervals between the inputs of neurons of an episode, including cases of "transitional" neurons with one input, on layers of the neurosemantic network. Events correspond to neurons of layer 1, which are conventionally indicated by one letter: *a, b, c, d, e, f* - and are located on the time axis in the order and at intervals as they occur within the episode. In this example, the method tracks patterns among all the events of the episode (similar to **Fig 9A**). The hyperparameter is selected as: $\sigma = 0.5$. The sequence of events *ab* occurs three times, corresponding to the pattern *p1* on the second layer. The sequence of events *cde* occurs twice, corresponding to the pattern *p2* on the second layer of the network. Event *f* occurs once in the episode, and on the second layer it corresponds to the "transitional" pattern *p3* with zero duration is like the event itself. On the third layer of the network, the sequence of patterns *p1p2,* which occurs twice on the second layer, corresponds to pattern *n1*. But pattern *p3* and pattern *p1,* which begins at time *t5,* are transmitted to the third layer through "transitional" neurons with one input - respectively *n3* with a duration of 0 and *n2* with a duration equal to *t6 - t5.*

As part of episode event processing, the intervals between patterns correspond to the exact intervals between events corresponding to the beginning and end of those patterns. For example, in **Fig. 10,** the interval on layer 2 between the first pattern *p2* and the second (mean) pattern *p1* is exactly equal to the interval *t5 - t4.* But the durations of the patterns themselves are only approximately equal to the duration between the events corresponding to the beginning and end of the pattern, as explained in **Fig. 9a.** For example, in **Fig. 10** the duration between events c and e in the first *cde* sequence is *t3 - t1,* while the duration between events c and e of the second *cde* sequence is *t11 - t9,* which is greater than *t3 - t1.* The pattern *p2* for *t3 - t1* of the interval and the pattern *p2* for the *t11 - t9* of the interval are used the same way, but in **Fig. 10,** both times, the pattern is depicted using rectangles of different widths, and when processing one episode to the next, the third layer transmits precise intervals as its duration - respectively *t3 - t1* and *t11 - t9.*

The above description of the intervals is true only at the stage of processing the events of the episode. After the episode events are processed, accurate information about the intervals between events in the patterns is not stored. If, after the end of episode processing, the top pattern of the *top1* episode to the event layer is expanded, the information about the intervals between events will be restored only with a certain accuracy. For example, with such an expanding, *top1* on the second layer will expand into two patterns *p1* the same length - the length that corresponds to the moment of creation of the neuron of this pattern, i.e., *t3 - t1* in this example.

This feature of working with the duration of pattern neurons allows the user to summarize the information in the input stream to the level of the order of events while maintaining the intervals between events only with a certain accuracy. Such a generalization is able to reflect real processes in the objects of the CPS or IS, in which the times within the same order sequences of events can vary.

Accurate information about all the times of events in all episodes is stored after processing episodes only in the neurons of top-episodes on the second layer of the network (see e.g., Fig. 9A).

Fig. 11 illustrates an exemplary implementation of a neurosemantic network activity monitoring due to special neuronal monitors **302d** on the minus first layer (-1) of this network. In a particular example of this example, the neuron-monitor **302d** named "Monitor 1" has one input with a dendritic tree. For each node of the dendritic tree, logic is determined when creating a monitor neuron (in particular, a logical "and" or a logical "or"), and the dendritic tree as a whole determines how the neuron-monitor can be activated. These nodes can be attached to the root (root node) of the dendritic tree. Dendritic node logic is applied to event field values (see e.g., **Fig. 6**). The number of inputs in the nodes of the dendritic tree can change during the operation of the network - for example, a monitor neuron may subscribe to new neurons created in the network that satisfy some of the conditions imposed on the values of the event fields corresponding to these neurons - thereby changing the number of inputs in the nodes of the dendritic tree.

In the present example, the monitor neuron **302d** "Monitor 1" is activated by one event neuron $e1$ on layer 1 or (node "or")) creating new neurons of events on layer 1 and at the same time (node "and") having input from neuron-value $v1$ on layer 0 in channel 0. If the second condition for a new event with a given field value is met, then, Monitor 1 is activated and at the same time remembers the newly created event already as a new input in the "or" node from the created event neuron.

Addressing neurons in the "or" node allows a user to automatically receive alerts only from those neurons of the neurosemantic network that fall within the subscription area, significantly reducing the load on the use of computing resources of the technical solution. This approach is in contrast to the option of receiving alerts about the creation or activation of any neuron of the network and subsequently checking whether this neuron corresponds to the subscription filters of the monitor neuron **302d.**

However, in the case of subscribing to a layer, the subscriber receives information about the creation of all the neurons in this layer and only then filters out those neurons that meet additional conditions for the values of the fields in the "and" node.

In one example, during its operation, the monitor neuron **302d** counts the number of its activations on a sliding window. Notification of the user by the monitor neuron **302d** is made when a predetermined threshold for the number of activations of the monitor neuron **302d** on the sliding window is exceeded.

In one example, when using the "attention" option for the field of the monitor neuron **302d,** it is possible to multiple subscribe to each individual attention direction value for a given field: for each value of this field, a child, hidden from the user, individual monitor neuron **302d** of the number of activations for this individual value is created. Information about the activation of the child neuron-monitor **302d** may be created and may be passed on to the parent. Hiding child monitors from the user is appropriate, because in practical cases, the number of field values can be very large and the user interface **303** would be greatly overloaded without such a concealment. At the same time, transmitting information about the activation of the daughter monitor neuron **302d** to the parent monitor neuron **302d** solves the task of alerting the user (or an external CPS system or IS).

Thus, the method of the present disclosure solves technical problems in identifying, in the flow of events from the CPS or IS, a structure of hierarchically nested repetitive (but not necessarily periodic) patterns, which reflects cause-and-effect relationships in the flow of events from the CPS or IS, as well as in assigning new patterns and new events to anomalies. Moreover, information about which event or pattern or what part of the pattern structure has not previously been observed indicates the presence of an anomaly in the CPS or IS.

In another example, the method of the present disclosure makes it possible to identify repetitive events and patterns and their structure, as well as to attribute new events and new patterns to anomalies in operations of the CPS or IS in the flow of events from the CPS or IS. The identification of repetitive events is performed via machine learning methods based on a neurosemantic network without the need to divide the work process into two isolated phases: a) training on historical data and b) recognition.

In another example, the method of the present disclosure improves the quality of detection of events and patterns and their attribution to an anomaly in the work of the CPS or IS due to each of the following factors: continuous training, additional optimization of the neurosemantic network during a special phase of the cycle of operation in the "sleep" mode (see **Fig. 4**) of the system, a mechanism for selective monitoring of the activity of a neurosemantic network based on special monitor neurons, interaction with predictive detectors that detect anomalies in telemetry.

In another example, the method of the present disclosure also makes it possible to detect patterns and anomalies in both CPS or IS if there are only a small number of examples of sequences of events corresponding to the pattern in the data, through the use of a neurosemantic network.

In another example, the method of the present disclosure also reduces the level of information noise in the flow of events by using a mechanism of attention to the values of event fields characterizing a particular CPS or IS.

**Fig. 12** is a block diagram illustrating a computer system **20** on which examples of systems and methods for identifying the structure of patterns and anomalies in the flow of events coming from the cyber-physical system or information system may be implemented. The computer system **20** can be in the form of multiple computing devices, or in the form of a single computing device, for example, a desktop computer, a notebook computer, a laptop computer, a mobile computing device, a smart phone, a tablet computer, a server, a mainframe, an embedded device, and other forms of computing devices.

As shown, the computer system **20** includes a central processing unit (CPU) **21,** a system memory **22,** and a system bus **23** connecting the various system components, including the memory associated with the central processing unit **21.** The system bus **23** may comprise a bus memory or bus memory controller, a peripheral bus, and a local bus that is able to interact with any other bus architecture. Examples of the buses may include PCI, ISA, PCI-Express, HyperTransport™, InfiniBand™, Serial ATA, I$^2$C, and other suitable interconnects. The central processing unit **21** (also referred to as a processor) can include a single or multiple sets of processors having single or multiple cores. The processor **21** may execute one or more computerexecutable code implementing the techniques of the present disclosure. The system memory **22** may be any memory for storing data used herein and/or computer programs that are executable by the processor **21.** The system memory **22** may include volatile memory such as a random access memory (RAM) **25** and non-volatile memory such as a read only memory (ROM) **24,** flash memory, etc., or any combination thereof. The basic input/output system (BIOS) **26** may store the basic procedures for transfer of information between elements of the computer system **20,** such as those at the time of loading the operating system with the use of the ROM **24.**

The computer system **20** may include one or more storage devices such as one or more removable storage devices **27,** one or more non-removable storage devices **28,** or a combination thereof. The one or more removable storage devices **27** and non-removable storage devices **28** are connected to the system bus **23** via a storage interface **32.** In an example, the storage devices and the corresponding computer-readable storage media are power-independent modules for the storage of computer instructions, data structures, program modules, and other data of the computer system **20.** The system memory **22,** removable storage devices **27,** and non-removable storage devices **28** may use a variety of computer-readable storage media. Examples of computer-readable storage media include machine memory such as cache, SRAM, DRAM, zero capacitor RAM, twin transistor RAM, eDRAM, EDO RAM, DDR RAM, EEPROM, NRAM, RRAM, SONOS, PRAM; flash memory or other memory technology such as in solid state drives (SSDs) or flash drives; magnetic cassettes, magnetic tape, and magnetic disk storage such as in hard disk drives or floppy disks; optical storage such as in compact disks (CD-ROM) or digital versatile disks (DVDs); and any other medium which may be used to store the desired data and which can be accessed by the computer system **20.**

The system memory **22,** removable storage devices **27,** and non-removable storage devices **28** of the computer system **20** may be used to store an operating system **35,** additional program applications **37,** other program modules **38,** and program data **39.** The computer system **20** may include a peripheral interface **46** for communicating data from input devices **40,** such as a keyboard, mouse, stylus, game controller, voice input device, touch input device, or other peripheral devices, such as a printer or scanner via one or more I/O ports, such as a serial port, a parallel port, a universal serial bus (USB), or other peripheral interface. A display device **47** such as one or more monitors, projectors, or integrated display, may also be connected to the system bus **23** across an output interface **48,** such as a video adapter. In addition to the display devices **47,** the computer system **20** may be equipped with other peripheral output devices (not shown), such as loudspeakers and other audiovisual devices

The computer system **20** may operate in a network environment, using a network connection to one or more remote computers **49.** The remote computer (or computers) **49** may be local computer workstations or servers comprising most or all of the aforementioned elements in describing the nature of a computer system **20.** Other devices may also be present in the computer network, such as, but not limited to, routers, network stations, peer devices or other network nodes. The computer system **20** may include one or more network interfaces **51** or network adapters for communicating with the remote computers **49** via one or more networks such as a local-area computer network (LAN) **50,** a wide-area computer network (WAN), an intranet, and the Internet. Examples of the network interface **51** may include an Ethernet interface, a Frame Relay interface, SONET interface, and wireless interfaces.

Aspects of the present disclosure may be a system, a method, and/or a computer program product. The computer program product may include a computer readable storage medium (or media) having computer readable program instructions thereon for causing a processor to carry out aspects of the present disclosure.

The computer readable storage medium can be a tangible device that can retain and store program code in the form of instructions or data structures that can be accessed by a processor of a computing device, such as the computing system **20.** The computer readable storage medium may be an electronic storage device, a magnetic storage device, an optical storage device, an electromagnetic storage device, a semiconductor storage device, or any suitable combination thereof. By way of example, such computer-readable storage medium can comprise a random access memory (RAM), a read-only memory (ROM), EEPROM, a portable compact disc read-only memory (CD-ROM), a digital versatile disk (DVD), flash memory, a hard disk, a portable computer diskette, a memory stick, a floppy disk, or even a mechanically encoded device such as punch-cards or raised structures in a groove having instructions recorded thereon. As used herein, a computer readable storage medium is not to be construed as being transitory signals per se, such as radio waves or other freely propagating electromagnetic waves, electromagnetic waves propagating through a waveguide or transmission media, or electrical signals transmitted through a wire.

Computer readable program instructions described herein can be downloaded to respective computing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network interface in each computing device receives computer readable program instructions from the network and forwards the computer readable program instructions for storage in a computer readable storage medium within the respective computing device.

Computer readable program instructions for carrying out operations of the present disclosure may be assembly instructions, instruction-set-architecture (ISA) instructions, machine instructions, machine dependent instructions, microcode, firmware instructions, state-setting data, or either source code or object code written in any combination of one or more programming languages, including an object oriented programming language, and conventional procedural programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a LAN or WAN, or the connection may be made to an external computer (for example, through the Internet). In some examples, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present disclosure.

In various examples, the systems and methods described in the present disclosure can be addressed in terms of modules. The term "module" as used herein refers to a real-world device, component, or arrangement of components implemented using hardware, such as by an application specific integrated circuit (ASIC) or FPGA, for example, or as a combination of hardware and software, such as by a microprocessor system and a set of instructions to implement the module's functionality, which (while being executed) transform the microprocessor system into a specialpurpose device. A module may also be implemented as a combination of the two, with certain functions facilitated by hardware alone, and other functions facilitated by a combination of hardware and software. In certain implementations, at least a portion, and in some cases, all, of a module may be executed on the processor of a computer system (such as the one described in greater detail in **Fig. 12,** above). Accordingly, each module may be realized in a variety of suitable configurations, and should not be limited to any particular implementation exemplified herein.

In the interest of clarity, not all of the routine features of the examples are disclosed herein. It would be appreciated that in the development of any actual implementation of the present disclosure, numerous implementation-specific decisions must be made in order to achieve the developer's specific goals, and these specific goals will vary for different implementations and different developers. It is understood that such a development effort might be complex and timeconsuming, but would nevertheless be a routine undertaking of engineering for those of ordinary skill in the art, having the benefit of this disclosure.

Furthermore, it is to be understood that the phraseology or terminology used herein is for the purpose of description and not of restriction, such that the terminology or phraseology of the present specification is to be interpreted by the skilled in the art in light of the teachings and guidance presented herein, in combination with the knowledge of those skilled in the relevant art(s). Moreover, it is not intended for any term in the specification or claims to be ascribed an uncommon or special meaning unless explicitly set forth as such.

The various examples disclosed herein encompass present and future known equivalents to the known modules referred to herein by way of illustration. Moreover, while examples and applications have been shown and described, it would be apparent to those skilled in the art having the benefit of this disclosure that many more modifications than mentioned above are possible without departing from the inventive concepts disclosed herein.

**Claims**

1. A system for detecting patterns and anomalies in the flow of events coming from a cyber physical system (CPS) or an information system (IS), comprising:

   one or more hardware processors;
   one or more memory media;
   a storage subsystem configured to:

      store a configuration of event fields, episode configurations, system configurations,
      to store and load into at least one memory of the neurosemantic network configurations and previous states of the neurosemantic network;

   one or more connectors configured to:

      get event data that includes a set of field values and an event timestamp for each event;
      generate at least one episode consisting of a sequence of events; and
      transfer the generated episodes to an event processor; and

   an event processor configured to process the episodes using a neurosemantic network, wherein the processing episodes includes:

recognizing events and patterns previously learned by the neurosemantic network;
training the neurosemantic network;
identifying a structure of patterns by mapping to the patterns of neurons on a hierarchy of layers of the neurosemantic network;
attributing events and patterns corresponding to neurons of the neurosemantic network to an anomaly depending on a number of activations of the corresponding neuron; and
storing the state of the neurosemantic network.

2. The system according to claim 1, wherein the configuration for processing of the episode further comprises a configuration for:

identifying a set of events and patterns of the neurosemantic that satisfy a predetermined criterion; and
generating output information about the set of events and patterns through the use of special neuron-monitor neurons of the neurosemantic network, which, by activating monitor neurons, monitor the creation and activation of the neurons corresponding to events and patterns,
wherein the predetermined criteria specify at least: values of the fields of individual events and events in the patterns; a sign of an recurrence of the events and patterns; and tracking, based on a sliding time interval, the activations and the number of activations during the sliding time interval.

3. The system according to any of claims 1 to 2, in which the optimal coverage of all events of the episode is selected according to either a hierarchical principle of the minimum length of the description, or according to a most compact coverage of all events of current and previous episodes.

4. The system according to any of claims 1 to 3, wherein the processing of the episode is performed in the neurosemantic network in layers.

5. The system according to claim 4, wherein the structures of the pattern are detected through a hierarchy of layers of the neurosemantic network on which neurons are located, and wherein

on a zero layer there are neurons of event field values grouped by channels corresponding to event fields, the zero layer being a terminal layer,
on the first layer there are event neurons,
on the second layer there are patterns consisting of events, and
on the third and higher layers there are patterns consisting of patterns of the previous layer thereby resulting in nested patterns.

6. The system according to claim 5, wherein,

on the zero layer of the neurosemantic network, the system having neurons corresponding to the values of the event fields, grouped by channels corresponding to the event fields, wherein the duration of the terminal neuron being taken as being zero and the zero layer being a terminal layer;
on the first layer of the neurosemantic network, the system having neurons corresponding to events, and having inputs from neurons of the terminal layer, wherein each input corresponds to the terminal neuron of the channel, different from the channels of terminal neurons of other inputs, the time intervals between event inputs from the field values being taken as being equal to zero, and a total duration of the event neuron being respectively taken as being equal to zero thereby indicating that the event has no duration;
on the second layer of the neurosemantic network, the system having neurons corresponding to episodes, the number of inputs of the neuron of the episode being equal to the number of events in the episode, the intervals between events in the episode being exactly stored as intervals between inputs of the neuron of the episode; and
on the second and subsequent layers of the neurosemantic network, the system having neurons corresponding to the sequences of events, with neurons of the third layer and subsequent layers having inputs from neurons of the previous layers and an expanding of the pattern to a sequence of events being carried out through recursive disclosure of all inputs up to the first layer, and the event being expanded to the values of the fields through inputs from terminal neurons.

7. The system according to claim 5, wherein the event processor is further designed to configure, store, and restore the neurosemantic network from the storage subsystem, wherein the configuration of the neurosemantic network includes:

configuration of input channels of the neurosemantic network in accordance with the event fields characteristic of a particular CPS or IP;

configuration of attention of the neurosemantic network by setting directions of attention for filtering the received events based on criteria on the values of the fields for recognizing patterns among the events filtered in each such direction;

configuration of permissible time deviations in the duration of the pattern, within which the neurosemantic network interprets sequences of events of the same order or nested patterns, but with different total durations of such sequences as the same pattern;

configuration of hyperparameters of network layers responsible for the number of neuronal inputs on the layer; and

configuration of the network hyperparameter responsible for the allowable number of layers of the neurosemantic network.

8. The system according to claim 5, wherein the event processor is further designed to:

configure neurosemantic network activity monitors through a creation of special monitor neurons that are activated based on subscription to other neurons or layers on which new neurons are created, configure a neurosemantic network, and form a subscription according to criteria specified in terms of event field values, the sliding time interval and the number of activations of neurons to which such a subscription is to be performed;

execute user requests on history of events and patterns;

perform periodic optimization of the neurosemantic network in the sleep mode of the system, the optimization including optimizing the structure of patterns and recognizing patterns at long intervals of time; and

perform the preservation of the state of the neurosemantic network, including information about patterns and statistics of activations on stream of events, and processed information about episodes of events.

9. The system according to claim 8, further comprising:

a graphical user interface, wherein the graphical user interface is used for the configurations of the neurosemantic network, for controlling connectors, for the configuration of neurosemantic network activity monitors, for output of information about monitored activities and operations, for the setting of user requests for history of patterns and events, for outputting of responses to user requests, for controlling sleep mode, and for settings conditions for preserving the state of the neurosemantic network.

10. The system according to any of claims 1 to 9, wherein the training is partially stopped by forcing the transfer of the neurosemantic network to a mode where the creation of new neurons does not occur, and wherein all training occurs only by changing neurons when they are activated.

11. The system according to any of claims 1 to 10, wherein a teacher is used for training a neurosemantic network by submitting, to the input, targeted patterns for training, and wherein a frequency of activation and/or a number of activations are based only on subsequent modification of the attribute in the generated neurons.

12. The system according to any of claims 1 to 11, wherein the storage subsystem is further configured to restart the operation of the event processor after a shutdown while retaining previously learned events and patterns.

13. The system according to any of claims 1 to 12, wherein the event processor is further configured to:

periodically remove patterns from the neurosemantic network of unused neurons, wherein the use of neurons is determined by statistical properties of the neurons and a hierarchical principle based on a minimum length of description of a functioning of the neurosemantic network.

14. The system according to any of claims 1 to 13, wherein the event processor is further configured to:

process episodes consisting of a single event in parallel on the massively parallel hardware architecture of the processors; or

process episodes consisting of a plurality of events sequentially on a single hardware processor, the number of events in the episode being selected based on predetermined requirements to provide information about the monitoring of the CPS or IS in accordance to criteria acceptable to a user of the system.

15. A method for detecting patterns and anomalies in the flow of events coming from a cyber physical system (CPS) or an information system (IS), the method comprising:

using at least one connector, getting event data that includes a set of field values and an event timestamp for each event, generating at least one episode consisting of a sequence of events, and transferring the generated episodes to an event processor; and
using the event processor, process episodes using a neurosemantic network,
wherein the processing episodes includes recognizing events and patterns previously learned by the neurosemantic network, training the neurosemantic network, identifying a structure of patterns by mapping to the patterns of neurons on a hierarchy of layers of the neurosemantic network, attributing events and patterns corresponding to neurons of the neurosemantic network to an anomaly depending on a number of activations of the corresponding neuron, and storing the state of the neurosemantic network.

Cyber-physical
system (CPS) 100

Physical subsystem
101: devices, sensors,
actuators

Digital subsystem 102:
calculations, storage,
Digital communications

Analog data

Telemetry

Anomaly detection tools in telemetry 200:
Diagnostic rules 201
Predictive detectors 202

Anomalies and
Patterns 600

Events 500

System for identifying structure of patterns and anomalies 300

Storage
subsystem
302

Event processor
301

Connectors 304

User Interface 303

Events 500

Anomalies and
Patterns 600

IS 400

## Fig. 1

Events 500

Event processor 301 based on neurosemantic network

Connectors 304

Storage subsystem 302

Neurons 302a

Network 302b

Episodes 302c

Monitor neurons 302d

Detections of monitor neurons 302e

Event field configuration 302f

Attention configuration 302g

Episode configuration 302h

System configuration 302i

User interface configuration 302j

User Interface 303:

Filters for pattern and event history queries and result output forms 303a

Monitor status indicators, User interfaces for viewing detailed states of monitors, controlling creation/deletion of monitors 303b

Control of system configurations 303c

Control of connectors 303d

Control of "sleep" mode 303e

Anomalies and Patterns 600

## Fig. 2

700 (Main operating mode)

```
┌─────────────────────────────┐          ┌──────────────────────┐
│  Launch/stop event processor │          │  Control connectors  │
│           303f               │          │         303d         │
└─────────────────────────────┘          └──────────────────────┘

        ┌─────────────────┐          ┌──────────────────┐
        │  Launch event   │          │ Launch connectors│
        │  processor 701  │          │       702        │
        └─────────────────┘          └──────────────────┘

┌─────────────────────────────┐    ┌─────────────────────────┐
│ Launch/stop event processor │    │     Neurons 302a        │
│           303f              │    ├─────────────────────────┤
├─────────────────────────────┤    │     network 302b        │
│ Configuration of attention 302g │ ├─────────────────────────┤
├─────────────────────────────┤    │     Episodes 302c       │
│ Configuration of episode 302h│   ├─────────────────────────┤
├─────────────────────────────┤    │  Monitor neurons 302d   │
│  System configuration 302i  │    └─────────────────────────┘
└─────────────────────────────┘
```

Load configurations and state of neurosemantic network 703

Episode arrival standby 704 ◄── Event 500

Process by the neurosemantic network episode of events, and alert about detected patterns and anomalies 705

Store network state 707

Anomalies and patterns 600

Stop episode processing loop and event processor 708

Store monitor neuron detection 706

Detection of monitors 302e

# Fig. 3

**800** Sleep mode

Control of sleep mode 303e

Select next interval of
episode history 801

Transition monitor neurons
into the sleep mode 802

Optimize large-scale structure of
interval of history of episode and
patterns on the neurosemantic
network 803

Anomalies and
patterns in "sleep"
mode 601

Neurons 302a

Network 302b

Episodes 302c

Monitor neurons 302d

Store network state 804

Transfer monitor neurons
into the main mode 805

Stop "sleep" mode 806

# Fig. 4

900

Filters for requesting history of patterns and
event and result output form 303a

Set filters for requesting
history of events and patterns
901

Search time interval

Option of selecting a search
for patterns or events

Option of signing for only new
events and patterns

Option of "attention" field

Filters of event field values

Neurons 302a

Network 302b

Episodes 302c

Processing user's request
902

Fig. 5

Indicator of state of monitor, forms for viewing detailed state of the monitor, control over creation/destruction of monitor 303b

Create new monitor neuron 1001

**Monitor parameters:**

Name of the monitor

Interval of the sliding window

Triggering threshold for the number of activations of the monitor

Activation stack size

**Subscription filters:**

Option of subscription on events and patterns

Option of subscription on new events and patterns only

"Attention" field option for subscription on patterns

Filters of event field values: List of values or regular expressions, or all values — only for filled with option «attention»

Neurons 302a

Network 302b

Processing user's request 1002

Monitor neuron 302d

# Fig. 6

Fig. 7

**Neuron of Layer L**

Main attributes:

n_n – number of neuron

n_l – Layer number (L)

v_in – Vector of inputs from neurons of previous layer

v_d – Vector of intervals between activations of inputs

w – Number of activations

v_out – Set of outputs to monitor neurons

Additional attributes:

k – Number of inputs

d – Duration equal to the sum of intervals v_d

l – Terminal length equal to the sum of terminal lengths of inputs

c – Channel if n_l = 0, Otherwise not defined

e – Type of top-neuron episode

n_l = L

v_in[0]   v_in[k]
v_in[1] v_in[2]

v_d[0]  v_d[1]  v_d[2]  ...  v_d[k]

Input neurons of layer L-1 and intervals between their activations

**Terminal neuron of layer 0 (Value of Event Field)**

c – Channel of entry to the network (corresponds to the field of event)

v_in = [ <value in the context of channel>]

v_d = [0] – Duration of value of event field is zero – atomic

k = 1 – Always only one entry (single field value)

l = 1 – Atomic length corresponds to one field value

n_l = 0

v_in[0]

value

v_d[0]

**Neuron layer 1 (events)**

v_in = [no more than one terminal neuron from each entry network channel]

k = Number of entry channels or less, but no less than one

v_d = [0]*k – all zeros

d =0 – Event does not have duration

l = k – Terminal duration of event

n_l = 1

**Top-neuron layer 2 (Episode of event histories)**

v_in = [ Neurons of episode of events ]

k = Number of events in the episode

v_d = [Precise intervals between events of the episode

l = Number of values of event fields in the episode

e = 0 – Type top-Neuron of episode of history of events

n_l = 2
e=0

**Neuron layer 2 and higher (pattern)**

v_in = [ Neurons of events or patterns of previous layer ]

v_d = [ Intervals between activations of entry at the moment of creation of pattern ]

e - For top-pattern of top layer in direction of attention equal to number n_n of the terminal neuron that determines the direction of attention

n_l >= 2

# Fig. 8

Layer 3
Neurons of patterns

P3_1,
w=1

Layer 2
Neurons of episodes
Neurons of patterns

Episode1

P2_1,
d=t1-t0,
w=2

P2_2,
d=t3-t2,
w=1

Layer 1
Neurons of events

E1  E2  E3  E4

Channel
"user"
u1 u2

Channel
"source"
s1 s2

Layer 0
Neurons of values
of event fields

Channel
"destination"
d1 d2

Channel
"verdict"
v1 v2

Episode
Event and Value of fields

| E1: u1s 1d1v1 | E2: u1s 1d2v1 | E3: u2s 2d1v1 | E4: u2s 2d2v2 | E1: u1s 1d1v1 | E2: u1s 1d2v1 |

t0    t1    t2    t3    t4    t5

Detection of patters in full stream (Direction of attention is not determined)
Hyperparameters of network σ = 0.5

Fig. 9A

Detection of patterns in full stream (one direction of attention is set – u1).
Hyperparameter of network σ = 0.5

# Fig. 9B

Fig. 10

Fig. 11

**Fig. 12**

Europäisches
Patentamt

European
Patent Office

Office européen
des brevets

# EUROPEAN SEARCH REPORT

Application Number

EP 23 19 0938

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Kharlamov Alexander ET AL: "Neuroinformatics and Semantic Representations: Theory and Applications" In: "Neuroinformatics and Semantic Representations: Theory and Applications", 29 April 2020 (2020-04-29), XP093119301, pages 1-318, Retrieved from the Internet: URL:https://www.cambridgescholars.com/product/978-1-5275-4852-7> * page 235 – page 247 * * page 255 – page 257 * * page 282 * | 1-15 | INV. G06F16/906 G06N3/00 |
| A | Lavrentyev Andrey B: "Neurosemantic approach and free energy minimization principle" In: "Neurosemantic approach and free energy minimization principle", 27 June 2014 (2014-06-27), XP093119322, pages 1-752, * the whole document * | 1-15 | |

TECHNICAL FIELDS
SEARCHED (IPC)

G06F
G06N

The present search report has been drawn up for all claims

| Place of search | Date of completion of the search | Examiner |
|---|---|---|
| Berlin | 16 January 2024 | Pose Rodríguez, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 11494252 B
- US 11175976 B
- US 9529690 B2
- US 20170293757 A1
- US 20200143292 A1

**Non-patent literature cited in the description**

- Neuroinformatics and Semantic Representations. **LAVRENTYEV A.B.** Neurosemantic Network. Cambridge Scholars Publishing, 2020
- Neurosemantics Information and Control Systems. Artificial Intelligence. **V. I. BODYAKIN.** Scientific Works, M.: Academic Project. Mir Foundation, 2020-803